# EUROPEAN PATENT SPECIFICATION

(11) **EP 0 770 434 B1**
(45) Date of publication and mention of the grant of the patent: **16.01.2002**
(21) Application number: 96117156.8
(22) Date of filing: 25.10.1996
(51) Int. Cl.: B21B 15/00, B23K 20/02

(54) **Method of bonding metal plates, apparatus therefor and hot strip mill**
Verfahren und Vorrichtung zum Verbinden von metallischen Blechen und Warmbandwalzwerk
Procédé et dispositif de soudage des tôles et laminoir des bandes à chaud

(30) Priority: 27.10.1995 JP 28011695
(43) Date of publication of application: 02.05.1997
(73) Proprietor: Hitachi, Ltd., Chiyoda-ku, Tokyo 101 (JP)
(72) Inventor: Funamoto, Takao, Hitachi-shi, Ibaraki 316 (JP); Nagakubo, Gen, Kitaibaraki-shi, Ibaraki 319-15 (JP); Mashiko, Takashi, Hitachi-shi, Ibaraki 316 (JP); Ishikawa, Fuminori, Hitachiota-shi, Ibaraki 313 (JP); Nishino, Tadashi, Hitachi-shi, Ibaraki 316 (JP); Yoshimura, Yasutsugu, Hitachi-shi, Ibaraki 316 (JP); Kajiwara, Toshiyuki, Tokyo 125 (JP); Yasuda, Kenichi, Hitachinaka-shi, Ibaraki 312 (JP); Nihei, Mitsuo, Hitachi-shi, Ibaraki 316 (JP); Takakura, Yoshio, Hitachi-shi, Ibaraki 316 (JP); Shimogama, Hironori, Hitachi-shi, Ibaraki 317 (JP)
(74) Representative: Beetz & Partner Patentanwälte

(56) References cited:
- PATENT ABSTRACTS OF JAPAN vol. 016, no. 507 (M-1327), 20 October 1992 & JP 04 187386 A (ISHIKAWAJIMA HARIMA HEAVY IND CO LTD), 6 July 1992,
- PATENT ABSTRACTS OF JAPAN vol. 095, no. 010, 30 November 1995 & JP 07 178416 A (SUMITOMO METAL IND LTD), 18 July 1995,
- PATENT ABSTRACTS OF JAPAN vol. 011, no. 155 (M-589), 20 May 1987 & JP 61 286004 A (MITSUBISHI HEAVY IND LTD), 16 December 1986,
- PATENT ABSTRACTS OF JAPAN vol. 018, no. 611 (M-1708), 21 November 1994 & JP 06 234005 A (KAWASAKI STEEL CORP), 23 August 1994,
- PATENT ABSTRACTS OF JAPAN vol. 018, no. 254 (M-1605), 16 May 1994 & JP 06 039405 A (KAWASAKI STEEL CORP), 15 February 1994,
- PATENT ABSTRACTS OF JAPAN vol. 010, no. 342 (M-536), 19 November 1986 & JP 61 144285 A (ISHIKAWAJIMA HARIMA HEAVY IND CO LTD), 1 July 1986,
- PATENT ABSTRACTS OF JAPAN vol. 010, no. 286 (M-521), 27 September 1986 & JP 61 103607 A (SUMITOMO METAL IND LTD), 22 May 1986,
- PATENT ABSTRACTS OF JAPAN vol. 011, no. 296 (M-627), 25 September 1987 & JP 62 089503 A (SUMITOMO METAL IND LTD), 24 April 1987,

## Description

The present invention relates to a method of bonding metal plates according to the first part of claim 1 and to an apparatus for bonding hot rolled plates according to the first part of claim 6 which makes it possible to perform continuous rolling by bonding hot rolled plates in a short time when the hot rolled plates are rolled by a set of coarse rolling mills and a set of finish rolling mills.

There are strong needs to improve productivity and quality and to realize automatic operation in a hot rolling facility of metal plates, by continuously performing finish rolling. The key technology is in the bonding of hot rolled plates (hereinafter, referred to as " sheet bars"). In the case of a cold rolling plate, it is possible to bond the plates and perform continuous rolling because the rolled plates are thin and the strength of bonding is sufficient. However, in the case of sheet bars, it is difficult to bond the bars by welding because the sheet bars are thick and the rolling speed (transferring speed of the rolled plate) is faster than that in a cold rolling mill since rolling must be finished before the temperature of the bars decreases.

In the past there have been many proposed methods of bonding sheet bars such as an electric heating method, a gas heating method, a melt-chopping method and a friction method. However, these methods have not been satisfactory as yet. The most important reason why they have not been satisfactory is that it takes a long time to bond the sheet bars. In a running type bonding apparatus, if the bonding of sheet bars can not be performed in a short time, the running length of the bonding apparatus becomes long since rolling speed of bar is fast as described above.
Therefore, it is difficult to realize such a machine. On the other hand, in a case where the bonding apparatus is of fixed type, a huge looper for accumulating bars is required since thickness of the sheet bar is generally as thick as 20 to 50 mm. In the past, it took 20 to 30 seconds at a minimum to bond sheet bars including the preparation for bonding, removing roll-over and burrs caused by pressing, etc. Technologies for shortening bonding time of bars are disclosed in the JP-A-6 234 005, JP-A-178416, JP-A-61-144285, JP-A-4-187386 and JP-A-6-39405.

In JP-A-6 234 005 a joining method for billet in continuous hot rolling is disclosed in which two billets are obliquely cut by moving upper and lower shearing blades and intermediate shearing blades in an oblique direction to the billets to form a pair of oblique bond surfaces, and then the oblique bond surfaces are bonded.

In the method described in JP-A-7 178 416 hot steel plates are overlapped, the overlapped portion is cut by shearing blades from upper and lower sides, and then the cut portions are bonded to each other. The cut surfaces are exposed to atmosphere, so that the atmosphere is a reducing flame atmosphere or non-oxidizing atmosphere.

JP-A-61 144 285 discloses a method of pressure welding in which sheet bars S1 and S2 are overlapped, pressed in the thickness direction from both sides by metal dies and slightly moved in the longitudinal direction, whereby the sheet bars S1 and S2 are pressure-welded.

In the technologies described in the cited JP-A-4-187386 and JP-A-6-39405 strong metallurgical bonding can be obtained in such a manner that end portions of a preceding rolled plate and the following rolled plate are cut and rubbed at the same time, and butted against each other if necessary, to bring the clean surfaces of the rolled plates in direct contact with each other without oxide films on the surfaces of the hot rolled plates.

As a method of completing bonding in a short time, there is a push back blanking method, for example, which is disclosed in fiscal Heisei 6 (fiscal 1994)plastic working spring season proceedings, page 455. This is a method wherein materials to be bonded are overlapped from each other, held by a die and stripper, and then pressed in by a punch, whereby the materials are bonded. According to the method, sheared surfaces of the materials are bonded in a moment, so that a high bonding strength can be attained.

From a series of tests in which the above technologies as disclosed in JP A 4-187386, JP A 6-39405 were applied to various kinds of materials of hot rolled plates having various thicknesses, the inventors of the present invention found that when the rolled plates were made of carbon steel or stainless steel and the thickness was thick, the bonding strength was insufficient and break sometimes occurred in the bonded portion during rolling. Break of a rolled plate during rolling scratches the surface of a roll and the whole process line has to be stopped, which substantially decreases production efficiency.

Further, the push back blanking method is an application of blanking, using a punch and a die and can not be used for bonding of metal plates which are object to be applied by the present invention, in particular, for bars each having thickness of several ten mm.

The object of the present invention is to solve the disadvantage in the conventional technologies described above, and to provide an apparatus and a method of bonding metal plates, particularly, hot rolled plates, capable of bonding the metal plates with a sufficient bonding strength within a short time.

The above-mentioned object is accomplished by a method for bonding metal plates comprising the features of claim 1 and by an apparatus having the features of claim 6.

As the overlapping mechanism overlapping portions to be bonded, the following mechanisms can be raised, for example, one of which is a mechanism overlapping metal plates in the vicinity of shearing blade by moving up and down a stage supporting one of the metal plates to be bonded at a lower side with power such as hydraulic power, pneumatic power, motor power, etc., another is a mechanism in which roller supports for transferring metal plates to be bonded, having different height around the bonding apparatus are provided and the metal plates are naturally overlapped when they reach the bonding position. Any mechanism is sufficient if metal plates to be bonded have been overlapped at the bonding apparatus.

As for the supports supporting an overlapped portion of metal plates at a lower side, usually, the overlapped portion is supported in such a direction that the weight applied to the metal plates is supported, that is, it is supported at the lower side. However, when the metal plates are of magnetic material they can be supported by magnetic force at an upper side, or they can be supported at a lateral side by standing them in the vertical direction. The support can have cubic shape, triangle-columnar shape, circle-columnar shape, and any support can be used as long as the shape of the support does not change when the shearing blade is pressed in the metal plate.

According to the above construction of the bonding apparatus, it is possible to perform sufficiently strong bonding of metal plates in a short time. In particular, it is possible to provide a bonding apparatus suitable for bonding rolling material(referred to as sheet bar), which apparatus is positioned between roughing and finishing hot strip mills and necessitated to provide by difference in rolling speed between the two kind of mills.

According to the invention an extension line of an operating locus of the shearing blade crosses one of the supports. That an extension line of an operating locus of the shearing blade crosses one of the supports means that in a case where the shearing blade is movable on an imaginary straight line, for example, the shearing blade hits the support when the blade is moved toward and over the plates to be bonded. In other words, it means that there is a part in bonding which is sandwiched between the shearing blade and the support and pressed. When the shearing blade moves leaving a curved operating locus, the movable shearing blade and /or the support is arranged so that an extension line of the locus crosses the support. By such arrangement of the movable shearing blade and the support, the plates to be bonded are compressed and elongated in a direction perpendicular to the compression direction during the compression, whereby clean surfaces of the plates to be bonded are pressed to each other and bonding strength can be raised.

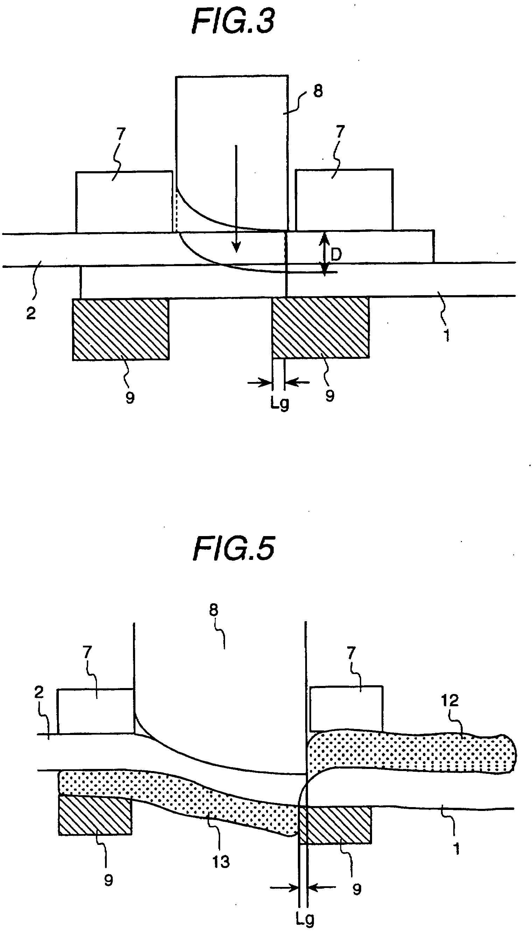

The shearing blade has such a shape that a lower edge portion of the shearing blade closer to one of the supports which the above-mentioned operating locus crosses is closer to an overlapped portion of the plates to be bonded than another lower edge portion closer to the other support.
For example, the section of the shearing blade is approximately arcuate shape when viewed from a side of the plate to be bonded, as in Fig. 3.

By such a construction of the shearing blade, a bending angle of the plates to be bonded becomes small, and it is easy to flatten the bonded portion after bonding. Further, even small power is sufficient for driving the shearing blade or supports.

It is preferable that the shearing blade relatively moves in a straight line to the supports and the shearing blade and the support overlap when it is viewed along the straight operating locus line. This means that the extension line of operating locus of the shearing blade crosses one of the supports and the shearing blade moves in a straight line. Since the shearing blade moves straightly, the apparatus has an effect that the construction thereof becomes simple.

A length of overlapping portion of the support and the shearing blade is preferably 10mm or less when it is measured along a length direction of the plate to be bonded.

Even if there is no overlapping, a certain strength of bonding can be attained. In particular, although there is no problem in a case of aluminum material which is soft, when plates to be bonded are thick, provision of the above-mentioned certain overlapping portion can increase the bonding strength.

A stroke of the movable shearing blade after contact with the upper surface of the plates to be bonded is preferably 50% or more and 150% or less of the maximum thickness of the overlapped metal plates.

In the present invention, it is preferable to bond metal plates by deforming the metal plates without shearing the metal plates. A lot of energy is required for moving the shearing blade or supports until the plate is completely sheared. Therefore, the stroke of the shearing blade, relative to metal plate is preferably 50% or more and 150% or less of the thickness of the plate. By this construction, it is possible to provide a bonding apparatus which can effect bonding of high strength with small consumption of energy.

In the invention, there can be provided an equipment by which the bonding apparatus is movable on a rail. For a bonding apparatus arranged between the roughing and finishing strip mills, by constructing the bonding apparatus so as to complete bonding while moving the bonding apparatus in synchronism with the feeding speed of a hot strip being rolled, it is unnecessary to provide a so-called looper which adjusts the feeding speed by deforming the strip being rolled. That is, a construction of a continuous rolling equipment becomes simple.

The supports can be constructed to be one piece or joined pieces with a concave shape. This construction makes the bonding apparatus simple and reduces a cost of the apparatus.

It is preferable that metal plate is hot rolling plate (sheet bar). The temperature of the metal plate to be joined is preferable to be higher in view of easy deformation of the plate. As a result, energy required for bonding becomes to be lower and bonding strength becomes to be higher. In the case of bonding cold rolling plates, heating before bonding can be used. In the case of hot strips being bonded, a heater is unnecessary and the construction can be made simple.

The section of the shearing blade pressed in the metal plate, viewed from a lateral side of length direction of the plate,is polygonal such as a trapezoidal shape, the contact area of the shearing blade with the plate changes continuously, and an angle of the shearing blade first contacting with the plate to the plate can be about 0° . This shape can be straight and arcuate. In a case of the arcuate shape, a tangential angle at a point in contact with the plate is made 0° . Further, an angle of the shearing blade first contacting with the plate in a direction perpendicular to the surface of the plate influences the life of the shearing blade in operation, so that it is desirable to be 90° or more. Further, it is desirable to form the shearing blade shape so that the trailing edge of the shearing blade is pressed in the overlapped portion of sheet bar at a time when the pressing of the shearing blade is completed. By forming the shearing blade in this shape, a lapped portion of the lower plate, corresponding to the trailing edge of the shearing blade bites into the concave of the supports, it is possible to cause a large pressing pressure in the bonding area.

The shape of the concave of supports influences greatly the bonding strength. The shape of the supports corresponding to a portion at which the shearing blade contacts first with the sheet bar is sufficient to be a shape along the operating locus of the shearing blade but preferable to be a shape such that the supports crosses an extension line of the operating locus. For example, when the operating locus of the shearing blade is a straight line perpendicular to the sheet bar, it is preferable to be an oblique shape not perpendicular but inclined, that is, 90° or less in an edge angle of an upper portion of the supports corresponding to a portion at which the shearing blade contacts first with the sheet bar, and larger in a bar length-wise distance between the supports of the concave as the depth of the concave becomes deeper. By this construction, all the overlapped portion of the lower bar, deformed in a case where the shearing blade is pressed in is self-locked and supported by the concave portion, whereby a large pressing pressure to the bonding area can be realized when the sheet bars are bonded. Further, it is desirable to form the support corresponding to a portion at which the shearing blade contacts finally with the bar to be such a shape that bites into the lower bar at the time of completion of the pressing as mentioned above. In usual, the support is sufficient to be a shape along the operating locus of the shearing blade, but it is preferable to be such a shape that protrudes to a direction of the shearing blade.

Further, operation conditions of the shearing blade are described hereunder. In this bonding method, the speed of pressing in of the shearing blade to the sheet bar influences greatly the bonding strength. When the speed is low, scales are unlikely to be separated, they are deformed together with the sheet bar, and the scales are likely to be spread widely in the bonded surfaces and left therein after the bonding. Therefore, high speed is preferable. 5 mm/s or more is preferable and more preferable 50 mm/s or more.

The bonding surface of the sheet bar according to the bonding method of the present invention is in a longitudinal direction of the sheet bar at the time of starting of the bonding, that is, immediately before the shearing blade presses, the bonding area is a part of the overlapped sheet bar. As the shearing blade moves down, the bonding surface is pressed in by the shearing blade to deform and finally it is in an oblique direction inclined against the thickness direction of the shearing bar. The angle changes according to the bonding conditions such as an amount of lapping of the shearing blade and the support, stroke of the pressing in, etc., and influences a rolling process after the bonding. The larger the angle is, that is, bonding surface becomes more oblique, the more the bonding area can be prevented from breaking during rolling and stably operated.

As one of the methods of securing the strength of a bonding area at the time when rolling, there is a method of enlarging the bonding area. In order to perform this, a sectional shape of the shearing blade and support viewed from an up and down direction of the sheet bar, that is, a shape in a width direction of the sheet bar is sufficient to be wave-formed shape. In a case where wave-form is formed in a triangle of 90° , for example, the bonding area is 1.4 times as compared with the case of straight line, when the angle of the triangle is 60° , the bonding area is 2 times compared with the case of straight line, when the wave form is shaped in the semi-circular shape, it is 1.57 times and when the wave form is formed in rectangle, the bonding area can be increased by an area corresponding to the sum (increased length) of the depth of the concave and convex. In this case, when the bonding area is shortened in the longitudinal direction of the sheet bar, the depth of the concave and convex is made smaller and the number of the waves is increased.

Since sheet bars have width of 1000 mm or more in usual, the sheet bar rolled, in particular at the trailing end becomes larger in elongation at the center. Therefore, the bonding area becomes likely to be cracked at width edges when it is rolled. In order to prevent this cracking, it is desirable to form bonding area at both width ends so as to protrude toward the forward direction of the sheet bar than the bonding area at the width center. That is, it is desirable that the shape of the shearing blade and support, viewed from upper or lower side of the longitudinal direction of the sheet bar is like a V shape in which both ends of the shearing blade and support protrude toward the forward direction of the sheet bar. As a concrete shape, an inverse triangle in a forward direction, a hemi-circle, or ellipse can be selected when it is needed. By superimposing the above-mentioned wave form on the V shape, an effect of increasing a bonding area increases and a stable operation of high reliability can be performed.

In bonding sheet bars, it is an object to bond the backward end of a preceding bar and the forward end of the following bar thereby to effect smoothly finish rolling in an after process, so that it is necessary to remove overlapped portions of the sheet bar(hereunder, referred to as crop) other than a bonded area. Easiness of the removal depends on a shape of the shearing blade and support. Further, bonding conditions such as an amount lapping between the shearing blade and the support, an amount of pressing stroke, etc., in particular, an amount of pressing stroke influences greatly thereon.

As mentioned above, a bonded area according to the present bonding method becomes a shape inclined against a thickness direction at a certain angle. The crop is cut off, however, connection between the crop and bonded sheet bar is left according to an amount of pressing stroke. As a method of separating crop, a proper method can be taken such as a method of pressing a crop in a direction of sheet bar length or width in a moment, a method of separating the crop by a tool such as craw, etc., however, in order to make it easy to separate, it is preferable to control the bonding condition so that a connection remaining part between the bonded sheet bar and the crop is 5 mm or less in a thickness direction. From this standpoint, a pressing stroke is at least bar thickness or more, preferably, 1.2 times the bar thickness or more. When the pressing stroke is 1.2 times the bar thickness or more, the connection remaining thickness becomes small and at the same time a plastic deformation of the bonding portion becomes large, so that bonding strength also increases. Further, when only bonding portion is descaled without descaling an other overlapped portion of the sheet bar, it is suitable for crop separation because crop separation force becomes small. On the contrary, in order to raise separability of crop, it can be used to coat inert material such as ceramic powder on a overlapped sheet bar surface except for bonding area before bonding. In this case, it may be necessary to remove the coated material from the bonded sheet bar after crop separation.

Some ideas are needed for crop removing, in particular, when sheet bars having different thickness or different width are bonded. In a case where sheet bars of different thickness are bonded, a pressing stroke is set so as to be is suitable for thicker one of the metal plates. By this setting, crop of a thinner sheet bar is in a state that the sheet bar is cut at bonding since almost no connection remaining portion is left. Crop separation is effective by providing a controller which can automatically adjust pressing stroke by detecting the thickness of sheet bars to be bonded. In a case where plates of different width are bonded, it is necessary to use a method of cutting the sheet bar so that the width of the plates are same as each other in a process till the completion of bonding after overlapping, a method wherein a shearing blade or support is divided into plural, the blade section out of the plate width has a pressing stroke increased by a stroke amount corresponding to the thickness in advance of bonding, etc.

As mentioned above, in the bonding method of the present invention, bonding is performed while keeping cleanness through crashing of scale on the metal plate surface, however, the crashed scale disperses in the bonded surface and a substantial bonding area decreases. In order to secure operability of high reliability by raising bonding strength and increasing success probability of bonding, it is desirable to perform descaling of surfaces of metal plates to be bonded before overlapping them. As the descaling method, there are various methods such as mechanical grinding by a rotating cutter, mechanical broaching, etc. jetting high pressure water, combustion gas jetting from acetylene gas burner, etc. It is preferable to select and use a method which is effective in a short time. Here, descaling is not necessarily performed on all the overlapped surfaces. As mentioned above, it is preferable to perform descaling of a limited region that a plate is deformed to be a bonding surface. Concretely, it is most preferable to effect descaling in a region of 10-30 mm in a longitudinal direction.

The present bonding method is principally solid phase bonding, and utilizes plastic deformation. For the bonding, temperature, cleanness and pressing pressure to the bonding surface are important. As mentioned above, hot rolled material reaches to a temperature of 800-1000°C, however, it is preferable to provide a heater or a temperature adjuster to attain stable bonding strength.
The bonding strength can be raised by rising the temperature of a material. Further, temperature adjustment always enables bonding under a constant condition, raise reliability of the bonding apparatus.

Further, according to the invention, there is provided a hot strip mill comprising an intermediate coiler coiling up a sheet bar, a leveler flattening the sheet bar from the intermediate coiler, a bonding apparatus overlapping the sheet bar from the leveler and bonding, a crop treatment apparatus removing crops produced during the bonding, and a finishing mill, wherein the bonding apparatus is characterized by a bonding apparatus described in claim 6. The invention can be applied as a bonding apparatus in the hot strip mill and has various effects such that a total length of the mill equipment can be shortened because a time required for the bonding is short, a looper can be omitted, no break occurs in a bonding area during rolling, thereby not scratching a rolling roll surface because sufficient bonding strength can be attained.

According to the invention the method of bonding metal plates includes the steps of overlapping at least two metal plates and then applying shearing force to at least one portion of the overlapped portion in a thickness direction of the metal plates, and bonding the metal plates while generating such pressing force that shearing surfaces of the overlapped portion are pressed each other.

As a method of extending the metal plates to be bonded in the longitudinal, it is sufficient to simply apply tensile stress to the metal plates in the longitudinal direction. However, since a large deformation rate cannot be attained when the distance between points of applying the stress is apart too long, it is preferable that the distance between the acting points is set short to attain a large deformation rate. The term "longitudinal direction" is used in contrast to the term "thickness direction". That is, it is not necessary to extend in parallel to the longitudinal direction, but the extending direction may be inclined to the thickness direction (upward and downward direction of the metal plates to be bonded). The metal plates to be bonded can be strongly bonded by extending the metal plates at the same time and pushing the extending portions against each other nearly in the direction perpendicular to the extending direction. The deformation rate of 1000 % itself is not a critical value. The larger the deformation rate is, the higher the cleanness of the bonded surface becomes and therefore the stronger the metal plates are bonded. The magnitude of the deformation rate may be controlled, depending on a required absolute value of bonding strength. In bonding of hot rolled plates, cleanness of the bonded surface is important. By extending the metal plates to be bonded so as to have a very large deformation rate, oxide films formed on the surface of the hot rolled plate are flaked and pealed off to expose a clean surface. Strong metallurgical bonding can be attained by pushing the hot rolled plates against each other so as to sandwich the clean surfaces. Since a generated clean surface is oxidized in a short time in atmosphere, it is preferable that the produced clean surfaces are not exposed to atmosphere by applying forces pushing the expanded metal plates each other so as to closely contact the clean surfaces. There are many variations of the bonding method depending on a method of extending the meal plates to be bonded and a method of applying the forces unevenly pushing the expanded metal plates each other. Variations of the bonding method in accordance with the present invention will be described below.

A bonding method bonds two metal plates by overlapping the two metal plates, and then restraining an overlapped portion of the metal plates not to move in the longitudinal direction and at the same time applying sandwiching pressures to part of the metal plates overlapped, nearly in parallel to the thickness direction of the metal plates from the upper side and the lower side of the metal plates.

At this moment, the part of the overlapping metal plates applied with the pressing pressure acts to be extended and produce a force to move the metal plats in the longitudinal direction. However, since the metal plates are restrained not to move in the longitudinal direction, a pressure parallel to the longitudinal direction of the metal plates is generated. The produced pressure parallel to the longitudinal direction of the metal plates is the sandwiching forces pushing the extending portion in the principle of the present invention. That is, by a single operation of applying the sandwiching pressure to the part of overlapped portion of the metal plates, the metal plates to be bonded can be expanded and the pressures to sandwich can be applied to the expanded portion at the same time. As the method of applying "sandwiching pressures to the metal plates overlapped nearly in parallel to each other in the thickness direction of the metal plates from the upper side and the lower side of the metal plates", something like an opposed-press machine may be used, but it is difficult to obtain a large extension rate using such a machine. Therefore, it is preferable to use a machine in which cutting blades are arranged opposite and offset, and the cutting blades are moved closer to each other, like in a pair of scissors. This operation can be easily understood by imaging a situation where a rubber sheet having a large elasticity is cut using a pair of scissors. As the cutting blades of the pair of scissors approach closer to cut the rubber sheet, the rubber sheet cannot be cut off well but is simply extended because of the high elasticity of the rubber. Similarly, as the portion of the overlapped metal plates are pushed by offset shearing blades from the upper side and the lower side, plastic flow is caused in the metal plates to produce extension of a large deformation rate. What shape of the shearing blade is used for sandwiching and pressing the overlapped portion of the metal plates is adjusted, based on the magnitude of pressure to be applied and the bonding strength to be required. A most simple method of restraining the metal plates so as not to be moved in the longitudinal direction is to mechanically restrain the metal plates by friction forces using clamps. Any method as far as it can restrain the metal plates, for example, a method utilizing electromagnetic forces, can be employed since the effect of the present invention can be attained.

A generalized example of the aforementioned construction is that "a means for restraining is at least two pairs of clamps sandwiching the overlapping metal plats from the upper side and the down side, and a means for applying the sandwiching pressures is a pair of shearing blades placed opposite to each other across the overlapping metal plates and being capable of applying a pressure higher than a yield stress of the metal plates".

The construction can be simplified by that one of the pair of shearing blades is a stationary blade and the other is a movable blade, and one of the clamps among the two pairs of clamps placed opposite to the movable blade serves also as the stationary blade.

In the above construction, the most dominant factor to determine the magnitude of bonding strength is the degree of extension of the metal plates. That is, the degree of extension becomes large as the operating stroke of the shearing blades is large. In a case of bonding plates made of a steel material, in order to obtain a bonding strength generally required, it is preferable that an operating stroke of the pair of shearing blades after being brought in contact with the upper surface of the metal plates is larger than 50 % of the plate thickness of the metal plate.

In order to further increase the bonding strength, the pair of shearing blades overlap with each other in an extending line of the operating locus of the shearing blade. The term "overlap" means that there is a portion where the upper shearing blade overlaps on a part of the lower shearing blade when the upper shearing blade is seen from directly above. By constructing as described above, the pressure to the bonding surface occurred at expending the metal plates becomes large and accordingly the strength of bonding becomes large. In a case of bonding plates made of a steel material, in order to obtain a bonding strength generally required, it is preferable that an amount of overlapping between the shearing blades is 0.1 mm or more. However, when the amount of overlapping is larger than 10 mm, the possibility to cause cracks in the width end portions of the metal plates. The above value is a criterion to determine an amount of the overlapping between the shearing blades, and the most preferable amount may be experimentally determined based on the criterion.

The portion called as the shearing blade in the above description can be referred to as the term "pressing jig" because it is not always necessary to be a blade.

In the bonding apparatus, it is also possible that one of the pair of blades is a stationary blade and the other is a movable blade, and one of the clamps among the two pairs of clamps placed opposite to the movable pressing jig serves also as the stationary blade.

In the above construction, there is no problem, from the view point of bonding, with that the shape of the movable pressing jig may be rectangle. However, from the view point of flatness of the bonded area after bonding, a preferable shape of the movable pressing jig is such that the height of a side close to the bonded portion of the metal plate to be.bonded in the upper side is the lowest and other side apart from the bonded portion of the metal plate to be bonded is higher. That is, it is preferable that the movable pressing jig is formed in such a shape that the cross-sectional shape of the movable pressing jig seeing from the width direction of the metal plate is a sector or a trapezoid in which the side connecting between the both edge portions of the movable pressing jig is a smooth curve.

The portion of overlapping the metal plates is formed not only by simply stacking metal plates to be bonded, but may be formed by butting two metal plates and putting a third metal plate on the butting portion. Although the bonding process in this method is more complex than in the aforementioned method, there are advantage in that flattening process after bonding can be omitted and an amount of crop generated during bonding is small.

Further, the upper clamp and the lower clamp in each of the two pairs of clamps placed in the upper side and in the lower side of the metal plate are linked and the two pairs of clamps are moved in parallel to each other so that the two pairs of clamps also serve as the pair of pressing jigs. Although the basic construction of the present invention is composed of six jigs, that is, two pairs of clamps and a pair of shearing blades, each of the jigs may be also served as the function of the other jig. In the method of the above case, the effect of the present invention can be attained by the total number of four jigs. The characteristic of the above case is that the clamps arranged in the upper side and in the lower side are linked to perform operations of extending and sandwiching to press the metal plates by moving the clamps arranged in the upper side and in the lower side at the same time and in parallel. However since a large stress acts on the link mechanism, it is necessary to design the link rods and the pivot potions connecting the link rod and each of the clamps so as to have sufficient strength. Therefore, it is thought that the bonding apparatus described above is suitable for a case where the metal plates to be bonded are formed of aluminum or copper which has a small yield stress.

It is preferable to apply the aforementioned bonding apparatus to a hot strip mill facility which comprises an intermediate coiler for coiling a metal plate, a leveler for flattening the metal plate coming out from the intermediate coiler, a bonding apparatus for overlapping and bonding the metal plate coming out from the leveler, a crop disposing apparatus for cutting off a crop produced at bonding and a finishing mill.

Describing the present invention in more detail, a preceding sheet bar and the following sheet bar are overlapped in the line of the hot strip mill facility, a lapping amount of the shearing blades is set to a specified value to produce a stress large enough to cause plastic flow deformation in the part of the overlapped portion, at least one of the shearing blades, the shearing blade in the upper side or the shearing blade in the lower side, is pushed into the sheet bars in the thickness direction of the sheet bars from upper side to the lower side or from the lower side to the upper side, plastic flow deformation is caused in the two bars to press-bond the surfaces of the upper bar and the lower bar. FIG. 3 shows an example of the arrangement of shearing blades where the upper shearing blade is pushed downward. Therein, when pushing depth (D) of the shearing blade is set to a value larger than the thickness of the sheet bar, the leftover end portion not contributing press-bonding can be cut off (crop-removing) during the deformation process and accordingly it is not always necessary to introduce an apparatus for crop-removing. As the bonding atmosphere, atmosphere and a non-oxidized atmosphere including vacuum may be acceptable. It is clear by considering the bonding mechanism that a better bonding result can be obtained if the present invention is performed in a non-oxidized atmosphere.

The key point of practical use of sheet bar bonding is in whether the bonding can be performed in a short time, and the bonding strength is acceptable if the bonding area does not break in the next rolling process. The present invention is realized by considering this point and eliminating unnecessary processes. That is, as described above, a preceding sheet bar and the following sheet bar are overlapped, the overlapped portion of the bars is arranged between the upper and the lower shearing blades in which a lapping amount of the shearing blades is set to a specified value to produce a stress large enough to cause plastic flow deformation in the part of overlapped portion, further the sheet bars are restrained by clamping, the two sheet bars are deformed by moving at least one of the shearing blades, the shearing blade in the upper side or the shearing blade in the lower side, into the sheet bars in the thickness direction from upper side to the lower side or from the lower side to the upper side to press-bond the surfaces of the upper bar and the lower bar. Therein, whether the bars can be bonded or not depends on whether sufficient plastic flow deformation is caused in the metal plates and whether pushing pressure necessary for close contact is applied to the metal plates. That is, when the plastic flow deformation occurs, the oxide films attached on the surface of the bar cannot withstand the deformation and are flaked and pealed off from the surface. Therefore, the contact surfaces are cleaned and at the same time pushed each other to be strongly bonded. In addition to this, when the surfaces of the bars are rubbed in the deformation process, the bonded surfaces are activated and the bonding strength is further improved. In general, it has been confirmed that bonding capable of sufficiently withstanding rolling can be attained with pushing speed of the shearing blade of nearly 1 mm/s even in atmosphere. However, when a bar (soft steel) having a temperature above 800°C is deformed with as fast as a pushing speed of higher than 500 mm/s, friction heat is generated due to rubbing action described above so that the surfaces of the bars are melted or brought to a semi-molten state, and the oxide films on the surface are accelerated to be dispersed and the bonding performance is further improved. Increase of pushing speed is very effective for increasing the bonding strength since the increase of pushing speed activates the contact surface even if the contact surfaces are not melted.

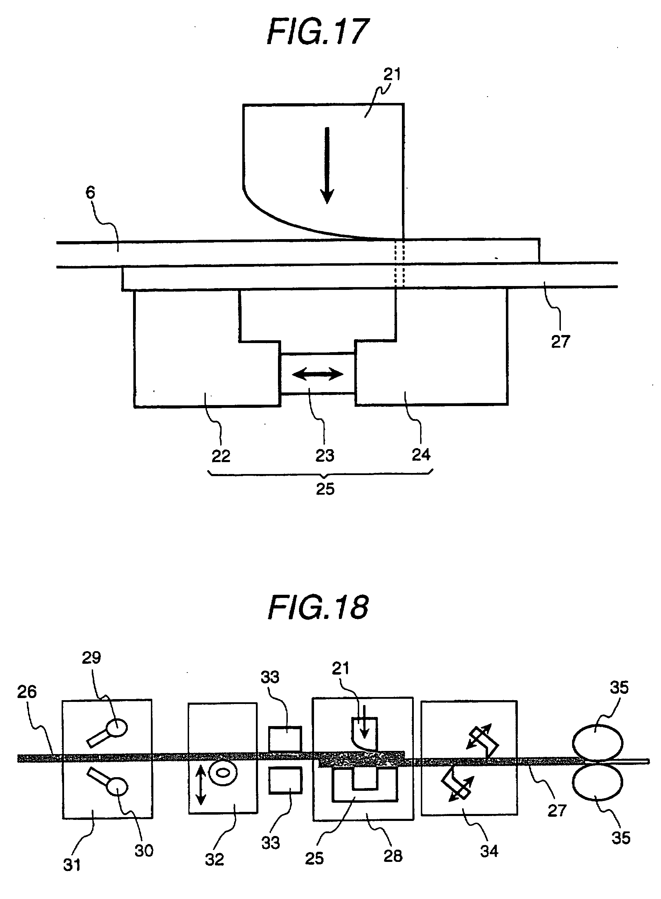

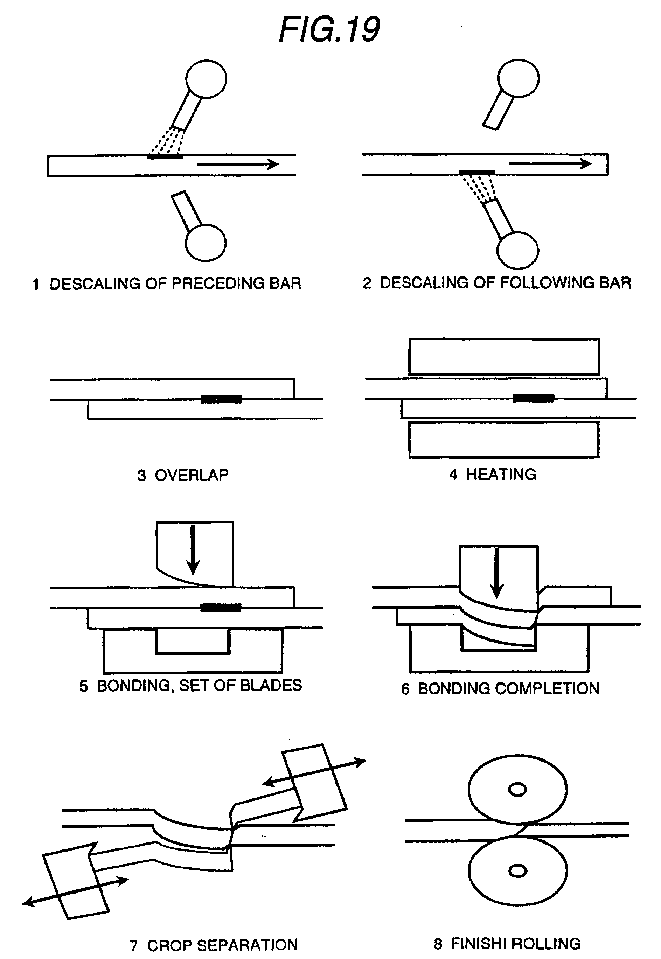

In order to obtain a bonded portion capable of withstanding rolling, it is necessary to closely contact the bars by applying sufficient pushing force in the plastic flow deformation process and the bonding process. The inventors of the present invention conducted various tests with the bonding method shown in FIG. 17 and found that by setting a position of the lower shearing blade within the movable range of the upper blade as shown in FIG. 17, plastic flow deformation took place by pushing with the shearing blade and the plastic flow deformation caused pushing force between the bonded surfaces of the bars to closely contact the bars each other. That is, by properly adjusting the positions of the upper and the lower shearing blades, pushing force is generated as the bars are deformed with plastic-flow and bonded as shown in FIG. 19 and the bonded portion is strong enough to withstand rolling.

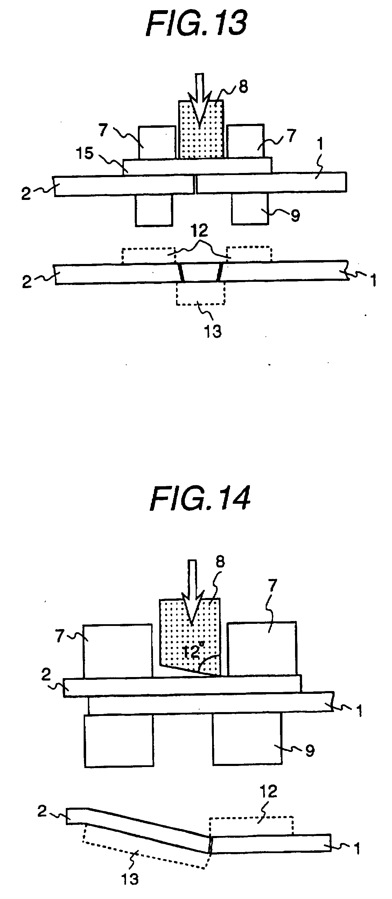

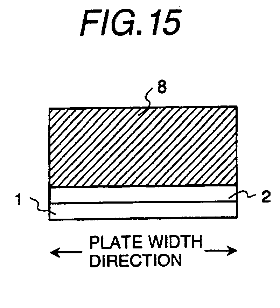

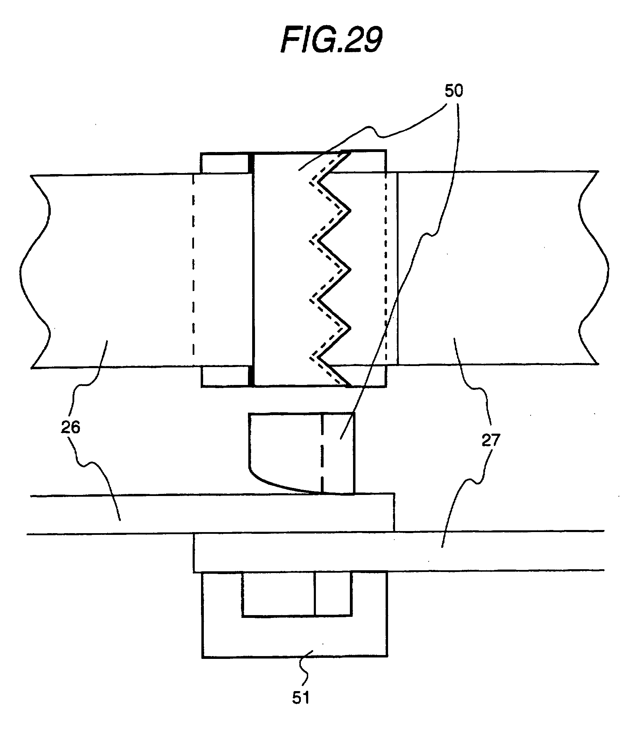

Further, in order to generate a larger pushing force in the process of pushing the shearing blade, the shape of the shearing blade is important. For example, a large pushing force can be generated by setting the radius of the top end portion in the shape shown in FIG. 19 to R 240 mm. On the contrary, in a case where the shape of the top end portion is designed to 12 degree as shown in FIG. 14, the pushing force is smaller than in the case of FIG. 19. Although it is necessary that the pushing force is varied depending on the material of the metal plates to be bonded, the pushing force can be varied by changing the shape of the shearing blade. When the shape of the shearing blade is designed in a straight shape as shown in FIG. 15, the whole width can be bonded but a large pushing force is required. However, it has been experimentally known that sufficient bonding strength capable of withstanding rolling can be obtained when the edge portion is strongly bonded. Therefore, bonding over the whole width is not always necessary. Further, it is possible that the shearing blade is designed in a wave-form as shown in FIG. 29 to bond discretely.

As having been described above, the present invention is brought through observing the bonding process of metal bars in detail.

According to the present invention, since the forward end of a bar and the backward end of a bar can be bonded, the bars can be continuously connected. Further, since the bonding method is simple and does not require any additional heating energy, the method has an advantage in maintainability of the apparatus. Furthermore, since the bonding method is essentially a solid-phase diffusion bonding and burrs are not produced in the bonded area, the bonding time is basically determined by the pushing speed. For example, if it is taken into consideration that the pushing speed is 100 mm/s, it can be understood that the method of the present invention is capable of shortening the bonding time. In addition to these, although it is confirmed that bars can be firmly bonded by setting the stroke of pushing to a value larger than 0.7 time of the thickness of the bar, it is preferable that the stroke of pushing is set to a value larger than the thickness of the bar when crop removal and bonding are performed at a time. In this case, any apparatus for crop removal is not required. Therefore, the present invention is the best method of continuously bonding bars.

### BRIEF DESCRIPTION OF THE DRAWINGS

FIG.1 is a view showing the basic construction of an embodiment of a bonding apparatus of hot rolled plate in accordance with the present invention.

FIG.2 is a view showing the principle of bonding in accordance with the present invention.

FIG.3 is a view showing the positional relationship of an upper and a lower shearing blades in a case in which the upper shearing blade is pushed.

FIG.4 is a view showing the outline of a bonding process in accordance with the present invention.

FIG.5 is a view showing press bonding process at plastic flow deformation in the figure showing the principle of bonding in accordance with the present invention.

FIG.6 is a chart showing an example of order and elapsing time of bonding work in accordance with the present invention.

FIG.7 is a graph showing the relationship between thickness of bar and amount of lapping in accordance with the present invention.

FIG.8 is a graph showing the relationship between pressing ratio and bonding strength in accordance with the present invention.

FIG.9 is a graph showing the relationship between pressing rate or speed and bonding strength in accordance with the present invention.

FIG.10 is a matrix showing the relationship among temperature of bar, and pressing speed, and presence and absence of melting in accordance with the present invention.

FIG.11 is across-sectional view showing an embodiment of a bonding apparatus in accordance with the present invention.

FIG.12 is across-sectional view showing an embodiment of a bonding apparatus in accordance with the present invention.

FIG.13 is across-sectional view showing an embodiment of a bonding apparatus in accordance with the present invention.

FIG.14 a cross-sectional view showing an embodiment of a shearing blade shape of a bonding apparatus in accordance with the present invention.

FIG.15 is a cross-sectional view showing an embodiment of a shearing blade shape of a bonding apparatus in accordance with the present invention seeing from the direction of plate width.

FIG.16 is a view showing a whole rolling mill facility in accordance with the present invention.

FIG.17 is a view showing the basic construction of an embodiment of a bonding apparatus of hot rolled plate in accordance with the present invention.

FIG.18 is a view showing a construction in which the bonding apparatus of the present invention is assembled in a hot strip mill.

FIG.19 is a view showing the outline of a bonding process in accordance with the present invention.

FIG.20 is a sectional view taken from a lateral direction of a sheet bar, of an example of a bonding apparatus of the present invention.

FIG.21 is a sectional view taken from a lateral direction of a sheet bar, of an example of a bonding apparatus of the present invention.

FIG.22 is a sectional view taken from a lateral direction of a sheet bar, of an example of a bonding apparatus of the present invention.

FIG.23 is a sectional view taken from a lateral direction of a sheet bar, of an example of a bonding apparatus of the present invention.

FIG.24 is a sectional view taken from a lateral direction of a sheet bar, of an example of a bonding apparatus of the present invention.

FIG.25 is a sectional view taken from a lateral direction of a sheet bar, of an example of a bonding apparatus of the present invention.

FIG.26 is a sectional view taken from a lateral direction of a sheet bar, of an example of a bonding apparatus of the present invention.

FIG.27 is a sectional view taken from a lateral direction of a sheet bar, of an example of a bonding apparatus of the present invention.

FIG.28 is a sectional view taken from a lateral direction of a sheet bar, of an example of a bonding apparatus of the present invention.

FIG.29 is a sectional view taken from an upper direction of a sheet bar, of an example of a bonding apparatus of the present invention.

FIG.30 is a sectional view taken from an upper direction of a sheet bar, of an example of a bonding apparatus of the present invention.

FIG.31 is a sectional view taken from an upper direction of a sheet bar, of an example of a bonding apparatus of the present invention.

FIG.32 is a sectional view taken from an upper direction of a sheet bar, of an example of a bonding apparatus of the present invention.

FIG.33 is a sectional view taken from an upper direction of a sheet bar, of an example of a bonding apparatus of the present invention.

### DESCRIPTION OF THE EMBODIMENTS

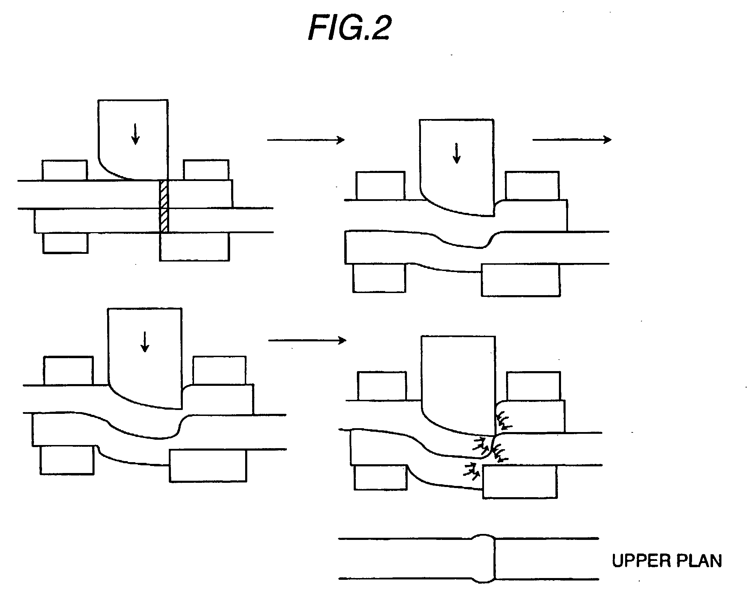

FIG.2 is a view showing the principle of bonding in accordance with the present invention. This figure is a view seeing plates from a side position of the plates. End portions of the two plates to be bonded are overlapped. The overlapped portion of the plates are clamped from the upper side and the lower side to be fixed. Then, a shearing blade is moved downward. Between the extending region of the operating locus of the shearing blade and the clamp in the lower side (the clamp in the lower side may be called as a "lower shearing blade") there is a lapping portion shown by hatching. In the present invention, the hatched portion is called as a sandwich pushed portion. This portion is pushed from the upper side and the lower side, and the pressure in this portion is gradually increased as the shearing blade is moved downward because the metal plates to be bonded are restrained between the clamps and the pressure is released only in the lateral direction. By this pressure, the metal in the pushed portion is extruded in the longitudinal direction of the metal plates. By this pressure, the pushed portion of the metal plates causes plastic flow deformation. In this case, the metal plates cause large plastic deformation without being separated by the pressure of the pushed portion. Although the plastic deformation depends on an amount of lap, the plastic deformation rate at this time becomes 1000% or more at a portion (for example, a portion near the first contact point between the upper shearing blade and the upper metal plate) in a case where the amount of lapping is 2 mm and the thickness of the metal plate is 200 mm. It is difficult to produce such a high deformation ratio in a common work process, but the sandwich pushing in accordance with the present invention can realize the high deformation ratio. After the upper shearing blade is lowered until the upper surfaces and the lower surfaces of the upper plate and the lower plate agree to each other, the upper shearing blade is stopped moving. In the present invention, strong bonding can be obtained by pushing the plastic flow deformed portions of the upper and the lower metal plates to each other. It is considered that the surface of the portion casing plastic flow deformation is activated and consequently strong metallic bonding can be obtained by a small pushing force (in this case, the force is the stress parallel to the longitudinal direction of the metal plates).

On the other hand, since the main propose of a conventional method is to cut off a metal plate by shearing, there is not any lapping portion as in the present invention. That is, an apparatus for the conventional method is a kind of shearers for cutting metal plate by shearing. In such a case, sufficient pressure is not produced since there is no sandwich portion. That is, in such a construction there is a problem in that the bonding strength is weak because sufficient plastic flow deformation does not occurs as does in the present invention. Further, since plastic flow deformation does not occurs in such a construction, a metal plate in contact with a crop is cut off at bonding in most cases.

Embodiments of the present invention based on the above principle will be described in detail below.

### Embodiment 1

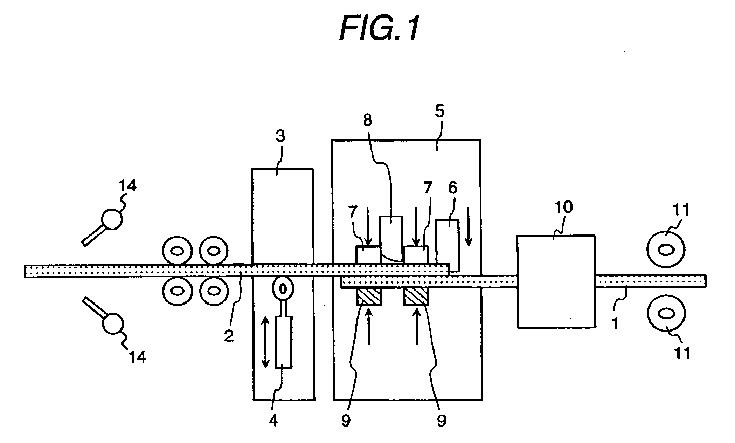

FIG.1 shows the basic construction of a facility suitable for applying the present invention. The reference character 1 is a preceding bar and the reference character 2 is the following bar. There is provided an apparatus 3 for overlapping the following bar on the preceding bar. The overlapping is performed by overlapping the following bar on the preceding bar by operating a hoist 4, adjusting an amount of overlapping and setting the positions of the upper and the lower shearing blades using a position adjusting machine 6 incorporated in a bonding apparatus 5. There is provided a necessary lapping between the upper and the lower shearing blades to produce sufficient plastic flow deformation. Then, after the both bars 1, 2 are clamped by a clamping mechanism 7, an upper shearing blade 8 is pushed toward the lower blade 9 until a depth of 2/3 or more of the thickness of the bar to bond the bars by causing plastic flow deformation and performing crop separation using a crop separation machine 10, and further flattening the bar by a leveling roll 11. Thus, the series of bonding processes are completed. The bar is transferred to a finishing rolling mill soon after completion of the bonding. Therein, more stable bonding can be attained if a process for removing oxide films on the surface of the bar before bonding.

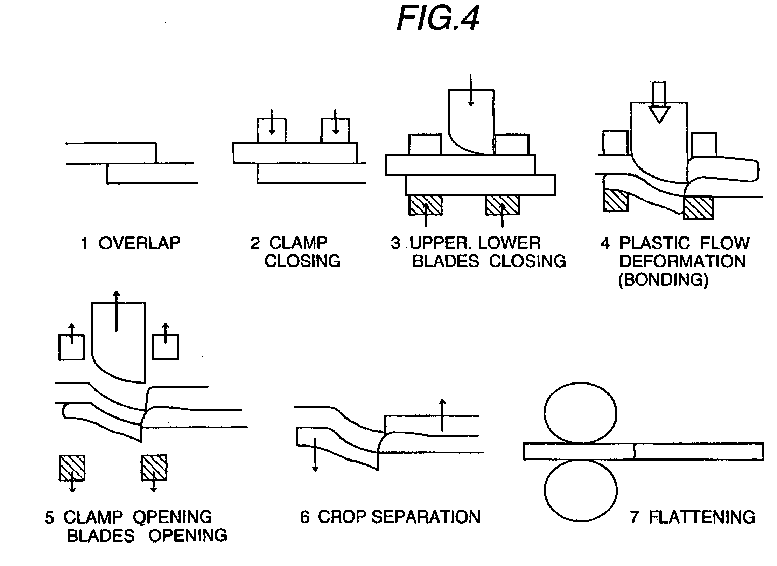

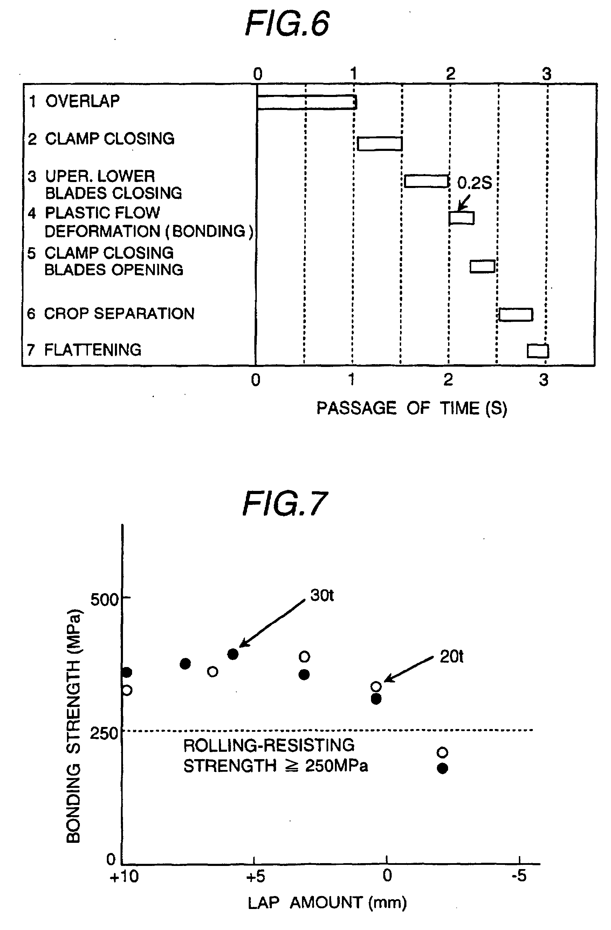

In order to perform continuous hot rolling of bars having a width of 1200 mm and a thickness of 20 mm using the facility shown in FIG.1, after overlapping a preceding bar and the following bar having a temperature of 1000 °C and clamping the bars, the preceding bar and the following bar are bonded by producing plastic flow deformation-by pushing in an upper shearing blade having a shape shown in FIG.4 toward the direction of the plate thickness with a pushing-in speed of 0.1 m/s, crop separation is performed, and then the bar bent by the deformation is passed through the leveling roll in order to flatten the bar. Thus, the bonding is completed. The lapping between the upper shearing blade and the lower shearing blade is 1.5 mm. The pushing depth is set to 22 mm. Here, the indication of the amount of lapping indicates that the positions of the upper shearing blade and the lower shearing blade are in the relationship shown in FIG.3. That is, it indicates that the lower shearing blade is positioned within the moving position of the upper shearing blade. Next, the bonding principle using the bonding apparatus 5 according to this embodiment will be described below, referring to FIG.4 and FIG.5. Fig.4 shows the bonding processes, and FIG.5 shows the detail of the press bonding process during plastic flow deformation. The reference character Lg is a lapping between the upper and the lower shearing blades. After placing the overlapped portion of the preceding bar and the following bar between the upper shearing blade and the lower shearing blade and clamping the both bars so as to not move during plastic flow deformation process, the preceding bar and the following bar are deformed by pushing the upper shearing blade (the lower shearing blade depending on a mechanism) into the bars. Oxide films are flaked and pealed off. Further in the deforming process, the pushing force acts between the bonded surfaces to closely attach bars and leftover ends 12, 13 are crop-separated. Therefore, in this embodiment, a crop separating machine is not operated and the bar is transferred to the leveling roll to perform the flattening process.

FIG.6 shows an example of order and elapsing time of bonding work using the bonding apparatus 5. The order of processes is overlapping, closing of the clamps, closing of the upper and lower shearing blades, plastic flow deformation (bonding), opening the clamps and the shearing blades, separating clop and flattening treatment, and the total time required for bonding was 3 seconds. The net bonding time, that is, the time required for the plastic flow deformation was 0.2 second in this embodiment, and accordingly it can be said that the present invention is the best method to shorten the bonding time.

It has been described above that the lapping between the upper shearing blade and the lower shearing blade and the positional relationship between the upper shearing blade and the lower shearing blade are important for flaking and pealing the oxide films and acting pushing force on the bonded surfaces. These will be described below further, referring to FIG.7. FIG.7 is a graph showing the relationship between thickness of bar and amount of lapping in accordance with the present invention. The bonding is performed under atmosphere and temperature of the bar is approximately 1000 °C. The bonding strength is determined by that a bonded area is obtained from broken surface of teat piece after the tensile test and a breaking load is divided by the bonded area. The pushing speed is 0.1 m/s. The pushing depth is set to a value equal to the thickness of the bar. The signs of plus and minus attached to the amount of lapping indicate the positional relationship of the upper and the lower shearing blades as described above. Large bonding strengths are obtained when the lapping is positive, and bonding strengths stronger than the strength capable of withstanding rolling can be obtained when the amount of lapping is larger than +0.1 mm in the case of the thickness of 20 mm and when the amount of lapping is larger than +0.3 mm in the case of the thickness of 30 mm. The maximum strengths are obtained when the amount of lapping is -3 mm in the case of the thickness of 20 mm and when the amount of lapping is -0.6 mm in the case of the thickness of 30 mm. Although an optimum amount of lapping is varied depending on the thickness of plate, it is clarified that the bonding strength capable of withstanding rolling can be obtained by setting the amount of lapping within the range of 0.5 to 15 mm within the thickness of applicable bar.

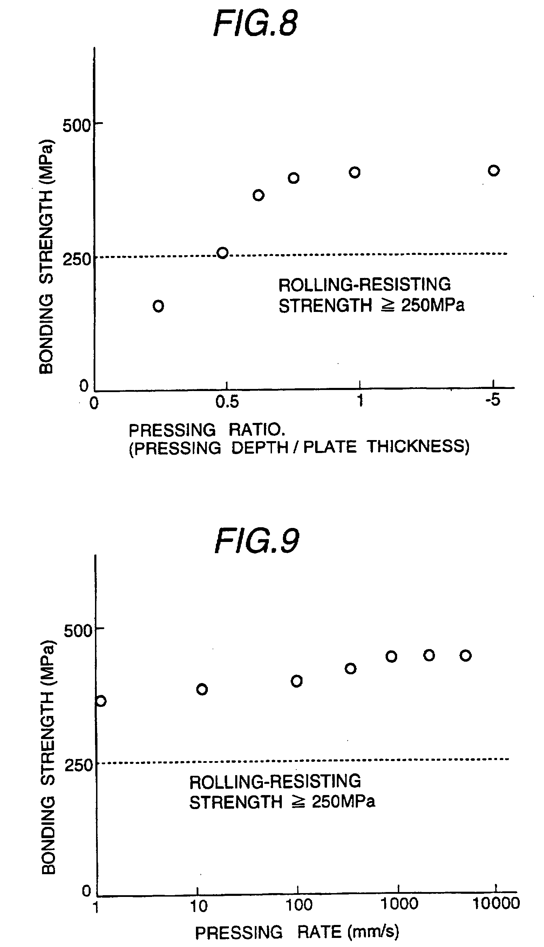

FIG.8 shows the relationship between pushing ratio and bonding strength. The plate thickness is 20 mm, and the amount of lapping is 5 mm. The pushing speed is 0.1 m/s. The result shows that bonding strength higher than the strength capable of withstanding rolling of 250 MPa can be obtained when the pushing depth is deeper than nearly 2/3 of the plate thickness. The same results have been obtained for a case of a plate thickness of 30 mm. Therein, the strength capable of withstanding rolling is a value obtained from a result of studying the relationship between strength of bonded portion and rolled ability.

FIG.9 shows the relationship between pushing speed and bonding strength. The amount of lapping is set to a constant value of 5 mm, and the plate thicknesses are 20 mm and 30 mm. within the range of the experiment, the bonding strength increases as the pushing speed is increased from 0.001 to 0.4 m/s. When the pushing speed exceeds 0.5 m/s, increase in the strength can be clearly observed. The reason of increasing in the strength is in that the bonded surfaces are melted by rubbing action in the plastic flow deformation process. That is, flaking of oxide films and existence of liquid phase contribute the improvement of the bonding ratio.

However, FIG.9 also shows that in order to obtain the strength capable of withstanding rolling it is not always necessary to increase the pushing speed, and it may be possible to select a proper pushing speed within the restrictions of the bonding time and manufacturing the apparatus.

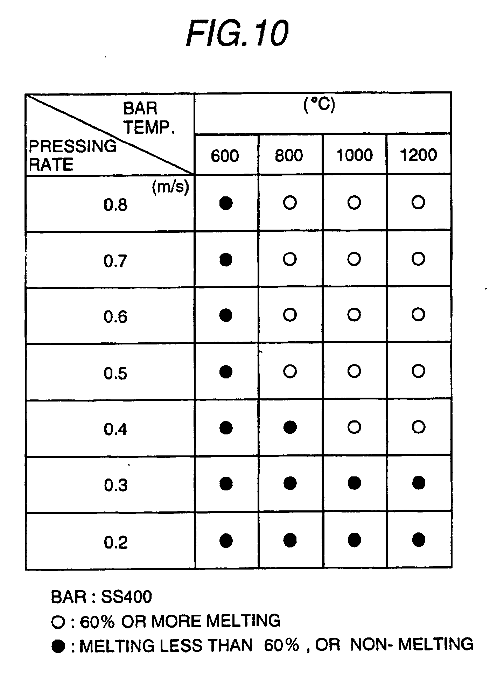

FIG.10 is a matrix showing the relationship among temperature of bar, and deforming speed (Va), and presence and absence of melting. From FIG.10, when the deforming speed is above 0.5 m/s in the case of temperature of the bar of 800 °C, the bonded surfaces are melted, the deforming speed at melting initiation shifts toward the low speed side as the temperature of the bar is increased, and the deforming speed is 0.4 m/s in the case of temperature of the bar of 1200 °C. Although the results for the bars having the melting initiation temperature is above 1400 °C the same, it is sown that the melted depth is larger and the melted ratio is increased as the melting initiation temperature is lower. The judgement whether melting exists or not is performed by whether the central surface of the bar is melted more than 60 % or not. The melted depth is a value obtained by corroding a polished cross section and then by judging from metallurgical structure.

Since the melted amount is small even when the pushing speed is large enough to produce melting portion, the bars can be bonded without burr.

As described above, according to the present embodiment, strong bonding can be attained by overlapping a preceding bar and the following bar, adjusting the lap of the upper shearing blade and the lower shearing block after clamping the bars, and causing plastic flow deforming in the bars above 2/3 time of the thickness. Crop separation can be performed depending on the pushing depth in the plastic flow deformation process. Unnecessary leftover ends can be disposed at a time. Therefore, it is possible to improve productivity and production yield and to realize automatic operation by continuously performing until finishing rolling in a hot rolling mill facility.

Although the present invention mainly deals with steel materials, the present invention can be applied when the objective material is changed. For example, the present invention can be applied to a marterial covered with a strong oxide film such as an aluminum alloy. Since the deforming characteristic and the oxide film characteristic are different from those of steel materials, it has been confirmed that a strong bonding can be attained by suppressing the amount of lapping smaller than that for steel materials and producing a larger plastic flow deformation than that for steel material. As described above, the present invention can be applied to a non-steel line.

Increasing the amount of lapping in the present invention means that the sheared end portion of an upper plate is pushed against a lower plate and deformed. That is, as the length of the lapping portion becomes larger, the pushing force at rubbing the upper plate and the lower plate becomes larger and the plastic deformation of the both plates becomes larger. In a case of the positive value of the lapping, the sheared surface end portions of the upper plate and the lower plate are rubbed a little, the flesh surfaces of the both plates are in contact with each other, the pushing force and the plastic deformation are small though the plates are bonded, and accordingly only insufficient bonding strength can be obtained as a result. The necessary amount of lapping depends on the kind and the thickness of plates to be bonded.

The characteristic of FIG.2 is in the shape of the upper shearing blade. It is sufficient only that the upper shearing blade rubs the sheared surface, and deforming the other portions is simply the loss of energy. In the past, it has been employed a method in which an upper plate is shifted downward so that the level of the upper plate and the level of the lower plate are brought to the same level. In the present invention, the positions of the clamps for the upper and the lower plates are not changed and the shearing blade is designed in a shape such that the shearing blade has an inclined surface when it is seen from the side direction, that is, the shearing blade has such a shape that the upper plate and the lower plate are in the same level at the bonded surface of the upper plate and the holding position of the plates is not changed at the clamping positions.
Thereby, the construction of the bonding apparatus becomes simpler and the energy loss can be decreased smaller compared to the apparatus where the setting position of the upper plate is changed.

### Embodiment 2

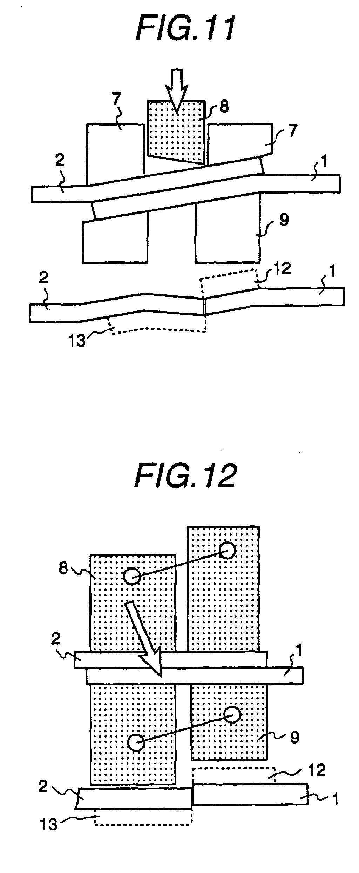

The basic construction of the facility is the same as that of Embodiment 1 and the shearing blades and the clamps are formed in the shapes shown in FIG.11. The clamping mechanism 7 and the lower shearing blade 9 are inclined in parallel. By this construction, the clamping mechanism 7 and the lower shearing blade 9 are inclined in parallel so that a large pushing force is generated in the bonded surface during the process where the shearing blade 8 is pushed on the metal plates 2. In this case, a lap portion is provided in the upper shearing blade 8 and the lower shearing blade 9 so that a sandwiching pressure is generated. Since a large pushing force is generated in the bonded surface, the bonded strength becomes large and the shape of the bonded portion after bonding becomes flat. Therefore, there is an advantage in that the leveling process after bonding can be eliminated.

### Embodiment 3

As shown in FIG.12, the upper shearing blade 8 and the lower shearing blade 9 are linked in parallel. In this construction, by lowering the upper shearing blade 8, a force sandwiching the metal plates 1, 2 is generated between the upper shearing blade and the lower shearing blade. Plastic flow is caused by the sandwiching, and accordingly the plates are bonded with the same principle as in Embodiment 1. In this construction, since the metal plate after bonding is also flattened, the leveling process after bonding can be eliminated.

### Embodiment 4

As shown in FIG.13, two metal plates to be bonded are butted after the end portions the two plates are cut off so as to be butt-bonded, and the cut high temperature metal plate 15 or a high temperature metal plate 15 prepared in advance is placed on the upper surface or on the lower surface of the butted portion of the metal plates, and the shearing blade is pushed from the upper surface or the lower surface to bond the plates. In this method, although the crop treatment and the pre-treatment such as cutting for butting are added, but the leveling process can be eliminated. In this case, even when there is no lapping portion between the upper shearing blade 8 and the lower shearing blade 9, a high pressure is generated in the metal plates by wedge-effect and sufficient plastic flow deformation can be caused. Further, it is possible to bond the metal plates by overlapping two metal plates instead of using three metal plates.

That is, in the present invention, a sandwiching pressure (may be called as "confined pressure") is applied to a very small portion of the metal plates to be bonded in regardless of arrangement of the shearing blades to cause deformation larger than a general plastic deformation rate in the metal plates and thereby to obtain strong bonding strength.

### Embodiment 5

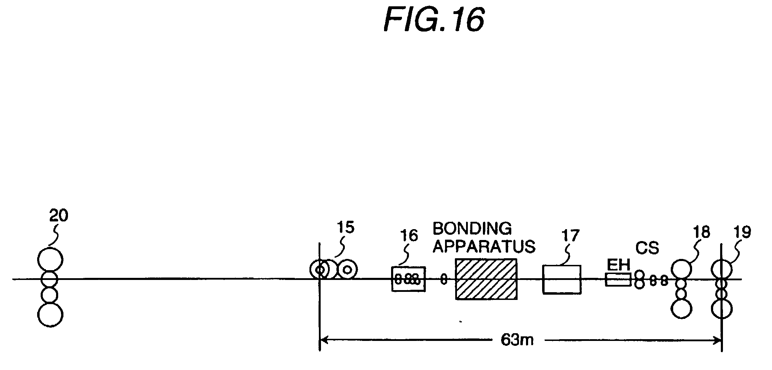

FIG.16 is a view showing a whole hot rolling mill facility in accordance with the present invention. Since the speed of a finishing mill after a bonding apparatus is higher than the speed of a continuous casting machine, an apparatus for control the speed of coiling a metal plate called as an intermediate coiler 15 is required between a coarse rolling mill 20 for a rolled block from the continuous casting machine and the bonding apparatus in order to matching the speeds of the line. After flattening the metal plate by removing coiling hysteresis of the intermediate coiler using a leveler 16, the metal plates are bonded using the bonding apparatus. The bonding apparatus performs bonding while running on rails. Since cut leftovers called crops are produced in the case of using the bonding apparatus according to the present invention, crop treatment 17 for removing crops is performed and the product is produced by passing the metal plate through the finishing rolling mills 18, 19. Since the bonding apparatus according to the present invention performs bonding within 3 seconds, the running distance of the bonding apparatus can be shortened. Thereby, the distance between the intermediate coiler and the finishing rolling mill can be made within 65 m. Therefore, the continuous hot rolling facility can be made small.

### Embodiment 6

FIG. 17 shows a fundamental construction of a bonding apparatus of the present invention. Reference number 21 denotes an upper shearing blade and reference number 25 a lower shearing blade. The lower shearing blade 25 is divided into a bonding side lower shearing blade 22 and a material support lower shearing blade 24 and the lower shearing blades 22 and 24 are connected to each other by a lap adjustor 23. Reference number 27 denotes a preceding bar and reference number 26 a following bar. FIG.18 is an example of fundamental construction in which a bonding apparatus of the present invention is applied to a continuous hot strip mill facility. Reference number 27 is a preceding bar and reference number 26 is a following bar. Oxide films on the surfaces of the bars 26, 27 are removed by a descaling apparatus 31 before the bars are overlapped.
The facility is provided with a lifter 32 for piling up the following bar 26 on the preceding bar 27. The bars are heated by a heater 33 to a predetermined temperature after overlapping the bars. Distance between the lower shearing blades 22 and 24 forming a concave of the lower shearing blade 25 is taken so that a necessary lap exists between the upper shearing blade 21 and the material support shearing blade 24 so as to cause sufficient plastic flow. The upper shearing blade 21 is pressed in the bars to an extent of the thickness of the bar or more to cause plastic flow thereby to bond the bars. Crops formed in the bonding are separated by a crop separator 34, then the bonded bar is transferred to a finish rolling mill 35. The descaling apparatus is provided with water sprays 29 and 30 disposed at upper and lower sides of the bars.

In the facility shown in FIG 18, continuous hot rolling of a bar (soft steel) of width 1500 mm and thickness 30 mm was performed. Partial descaling of a preceding bar of 1000°C and a following bar of 900°C is effected by high pressure water spraying and then the bars are overlapped. The overlapped portion is heated and adjusted to be 950°C, and then transferred to the bonding apparatus. The bonding apparatus is as shown in FIG. 17. Here, a lap amount between the upper shearing blade 21 and bonding surface side lower shearing blade 22 and the material support lower shearing blade 24 are adjusted to be 3 mm and 0 mm, respectively. The upper shearing blade 21 has an arcuate shape as shown in FIG. 17, the radius of the arcuate portion is R240. The length of the blade in the longitudinal direction of the bar is 100 mm, the width of the blade is 1600 mm. The concave portion of the lower shearing blade 25 both are perpendicular to the bar. The upper shearing blade is pressed in the bar by 1.2 times the thickness of the bar, that is , 36 mm, at a pressing speed of 300 mm/s, thereby to cause parts of the preceding and following bars to perform plastic flow and bond the bars. At this time, a part of the lower bar corresponding to a part of the upper shearing blade finally contacting with the bar bites into the material support lower shearing blade by about 5 mm. Next, a craw is pressed in crops and separate it, whereby the bonding is completed. The bonded bar is sent to the finish rolling mill and rolled. As a result, a continuous rolling is performed without breaking in the bonding portion of the bar. Each step of the above process is shown in FIG. 19. In this embodiment, time required from a step 1 of partial descaling to a step 7 of crop separation, as shown in FIG. 19 is 5 sec. Bonding test of a simulate bar is conducted until the step 7 of crop separation in FIG. 19, and then a test piece is made from the bonded portion of the simulate bar and tensile strength test is conducted. As a result, the same tensile strength as the matrix is attained.

### Embodiment 7

Using the bonding apparatus of the embodiment 6, bonding experiment is conducted by adjusting lap amounts between the upper shearing blade and the bonding surface side lower shearing blade and the material support lower shearing blade to 1.5 mm and 0 mm; 0 mm and 0 mm; 0.5 mm and 0 mm; and 5 mm and 0 mm, respectively. In any cases, excellent bonding strength was attained. While a lap amount between the upper shearing blade and the bonding surface side lower shearing blade is fixed to 3 mm, a lap amount between the upper shearing blade and the material support lower shearing blade is changed to -3 mm, -1.5 mm, 1.5 mm, whereby a bonding experiment was conducted. In any cases excellent bonding strength was attained.

Further, lap amounts between the upper shearing blade and the bonding surface side lower shearing blade and the material support lower shearing blade is set to 3 mm and 0 mm, respectively, and pressing in speed of the upper shearing blade is changed to 5 mm/s, 10 mm/s, 50 mm/s, 100 mm/s, 500 mm/s, whereby a bonding experiment is conducted. As a result, the faster the pressing in speed becomes, the larger the bonding strength becomes.

Further, under the same conditions as in the embodiment 6, the lower shearing blade is pressed in upwards by 36 mm, whereby a bonding experiment was conducted. The same bonding strength as in the embodiment 6 was attained.

### Embodiment 8

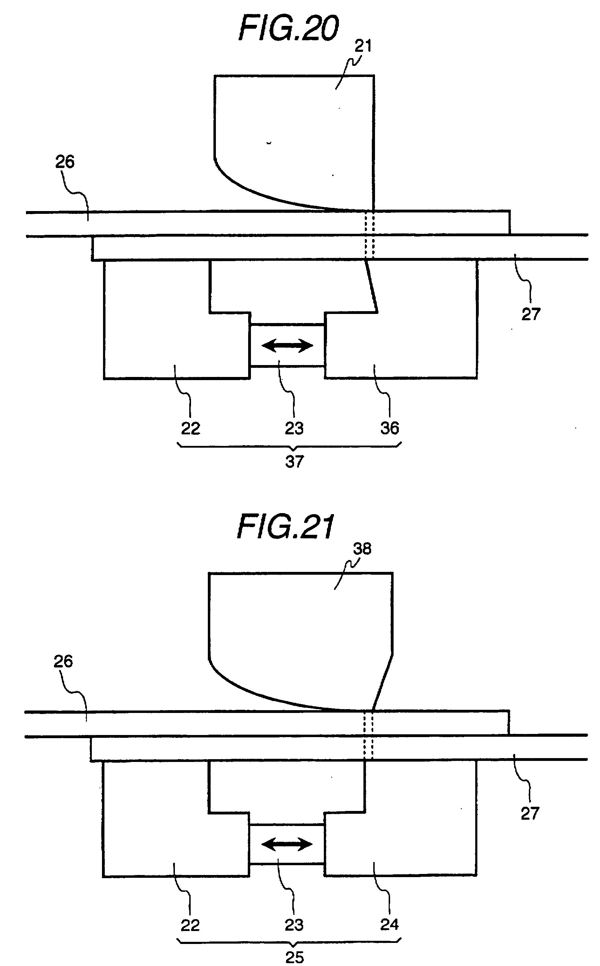

A lower shearing blade 37 is constructed as the lower blade 25 of the bonding apparatus of the embodiment 6 except for a bonding surface side lower shearing blade 36. The shearing blade 36 has a shape inclined to the upper shearing blade side, as shown in FIG. 20. The inclination angle is 5° against a perpendicular direction. Using this bonding apparatus, a bonding experiment of soft steel simulate bar of 30t is conducted. The lap amount, pressing in stroke, pressing speed are the same conditions as in the embodiment 6. The strength of the bonding portion is 350 MPa, and higher strength is attained than in the embodiment 6. Further, a bonding experiment is conducted, changing an angle of the bonding surface side lower shearing blade to 10° , 15° and 20° . As a result, it is found that the bonding strength tends to increase as the angle increases.

### Embodiment 9

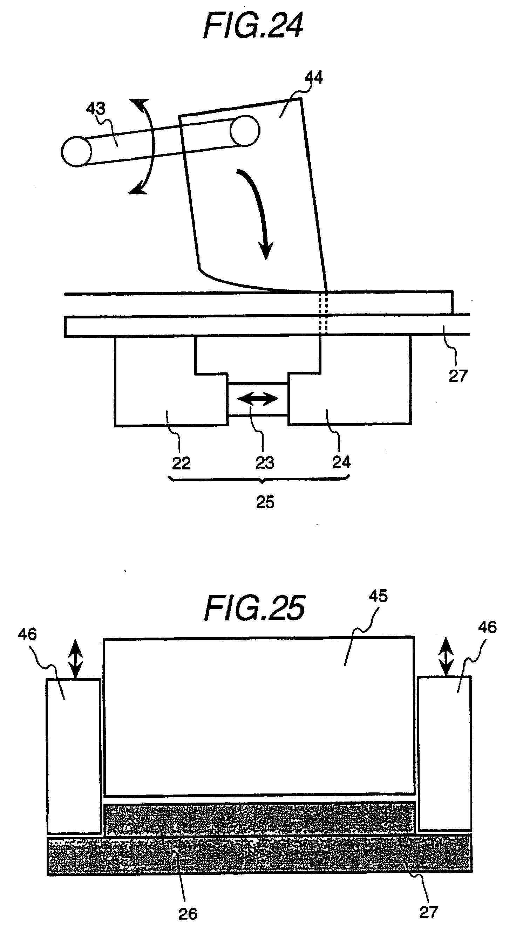

A bonding apparatus of this embodiment is the same as that of the embodiment 6 except for an upper shearing blade 38 has a shape inclined to a side of the bonding surface side lower shearing blade 24, as shown in FIG. 24. The inclination angle is 15° against a perpendicular direction. Using the bonding apparatus, a bonding experiment of a soft steel simulate bar of 30t is conducted. The lap amount, pressing in stroke, pressing speed are the same conditions as in the embodiment 6. The strength of the bonding portion is higher than in the embodiment 6.

### Embodiment 10

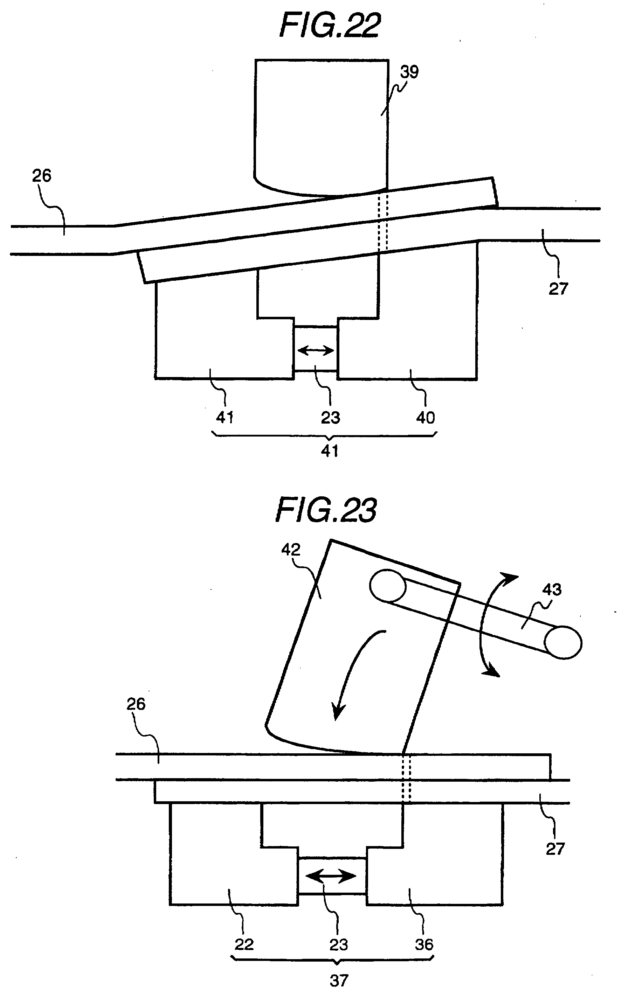

A lower shearing blade 41 in this embodiment is the same as the lower shearing blade of the bonding apparatus of the embodiment 6 except that it has a shape in which faces of the lower blades contacting with a sheet bar 27 is inclined against a running direction of the bar. The angle against the running direction is 15° . An upper shearing blade 39 also is shaped such that a crossing point of the lower surface and a line from a crossing point of an upper surface and a front side in a perpendicular direction and inclined 15° against the front side is a starting point of an arc, as shown in FIG. 22, and a tangential line at the arc starting point is in parallel to the sheet bar. Using the bonding apparatus, a bonding experiment of a soft steel simulate bar of 30t is conducted, wherein the lap amount, a pressing in stroke and a pressing speed are 0 mm, 38 mm and 300 mm/s, respectively. The strength of the bonding portion is sufficient for rolling.

### Embodiment 11

An upper shearing blade 42 is different from the upper shearing blade 21 of the bonding apparatus of the embodiment 6 in that the shearing blade 42 is fixed to an end of an arm 43 and swung around another end of the arm 43 so as to press the overlapped portion of the sheet bars 26, 27, as shown in FIG. 23. A lower shearing blade 37 is the same as that of the embodiment 6. Using the bonding apparatus, a bonding experiment of a soft steel simulate bar of 30t is conducted. The lap amount, pressing in stroke, pressing speed are the same conditions as in the embodiment 6. The same bonding strength as in the embodiment 6 is attained.

### Embodiment 12

An upper shearing blade 44 is fixed to the arm 43 which is swingable about an end thereof. The other construction is the same as the upper shearing blade 21 of the bonding apparatus of the embodiment 6, as shown in FIG. 24. In this case, the lower shearing blade is the same as in the embodiment 6. Using the bonding apparatus, a bonding experiment of a soft steel simulate bar of 30t is conducted. The lap amount, pressing in stroke, pressing speed are the same conditions as in the embodiment 6. The same bonding strength as in the embodiment 6 is attained.

### Embodiment 13

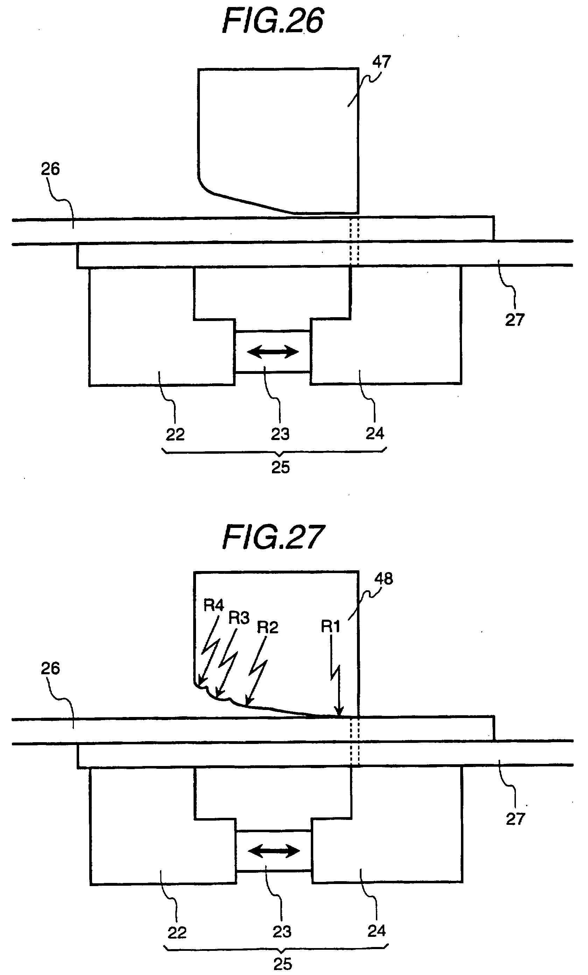

In the bonding apparatus of the embodiment 6, the upper shearing blade is divided into three 45, 46, 46 , and provided with a mechanism in which the shearing blades 46 at both ends can project downwards than the shearing blade 45 at the center, as shown in FIG. 25. The width of each of the shearing blades 46 at the ends is 400 mm, and the width of the central shearing blade 45 is 1400 mm. Using the bonding apparatus, a plate of 1400 mm width and a plate of 1500 mm width are bonded. The thickness of each plate is 30 mm. The height of projection is adjusted to 30 mm in advance, the pressing stroke of each of the three shearing blades 45, 46 is 30 mm. A sufficient bonding strength is attained. Crop can be easily separated in the same manner in the embodiment 6.

### Embodiment 14

Using the bonding apparatus of the embodiment 6, a sheet bar of 20 mm thickness and a sheet bar of 30 mm thickness are bonded. The width of each sheet bar is 1500 mm. The lap amount is the same as in the embodiment 6. The pressing stroke is set 36 mm, that is, it is 1.2 times the thickness of the thicker sheet bar. The same bonding strength as in the embodiment 6 is attained.

### Embodiment 15

An upper shearing blade 47 is made by forming an upper shearing blade as in the bonding apparatus of the embodiment 6 into such a shape that 1/3 of the blade in the sheet bar longitudinal direction is in parallel with the sheet bar, the following part is straight line inclined 10° against the sheet bar and a final contact portion is partial arc of R30, as shown in FIG. 26. Using the bonding apparatus, a bonding experiment of a soft steel simulate bar of 30t is conducted. The lap amount, pressing in stroke, pressing speed are the same conditions as in the embodiment 6. The bonding strength was higher than in the embodiment 6.

### Embodiment 16

An upper shearing blade 48 is formed by forming an upper shearing blade as in the bonding apparatus of the embodiment 6 into a multi-arc shape formed by multiple arcs in a sheet bar longitudinal direction, as shown in FIG. 27. In FIG. 27, radius R1 is R360, R2 is R120, R3 is R80 and R4 is R 30, the surface is made so as to be in a smoothly changing curve. Using the bonding apparatus, a bonding experiment of a soft steel simulate bar of 30t is conducted. The lap amount, pressing in stroke, pressing speed are the same conditions as in the embodiment 6. The bonding strength was higher than in the embodiment 6.

### Embodiment 17

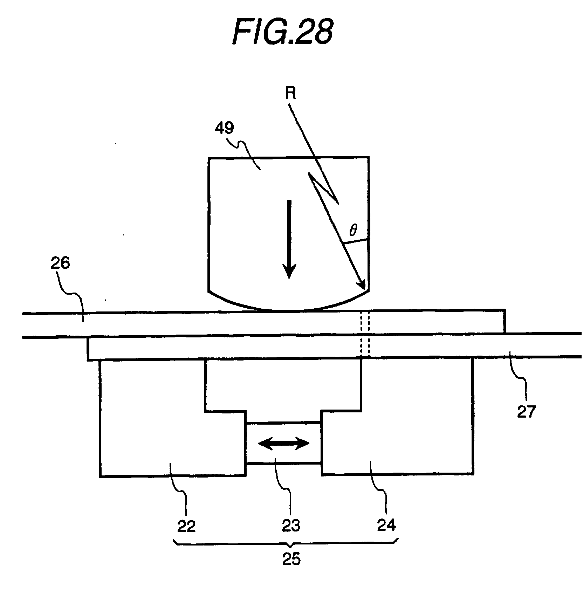

An upper shearing blade 49 is formed by forming an upper shearing blade as in the bonding apparatus of the embodiment 6 into a shape in which a portion starting to contact with the sheet bar is shifted a little toward a backward side from the bonding portion, as shown in FIG. 28. The lower side of the upper shearing blade is arcuate and its radius is R 240 mm. The arc starts at θ 10° against the perpendicular front side thereof, as shown in FIG. 28. Using the bonding apparatus, a bonding experiment of a soft steel simulate bar of 30t is conducted. The pressing in stroke is 40 mm, the other bonding conditions are the same as in the embodiment 6. The bonding strength was as high as that in the embodiment 6.

### Embodiment 18

An upper shearing blade 50 is formed by forming an upper shearing blade as in the bonding apparatus of the embodiment 6 into a wave-form shape formed in triangles when viewed from upper side of the sheet bar, as shown in FIG. 29. The shape of the upper shearing blade viewed from a lateral side of the sheet bar is formed by a straight line in parallel with the bar and an arc-line, which straight line expresses a portion corresponding to the wave-formed portion and the arc-line the other portion. The shape of the lower shearing blade 51, viewed from the upper side of the bar is wave-form which is the same as the shape of the upper shearing blade. Using the bonding apparatus, a bonding experiment of a soft steel simulate bar of 30t is conducted. The lap amount, pressing in stroke, pressing speed are the same conditions as in the embodiment 6. The bonding strength was higher than in the embodiment 6.

### Embodiment 19

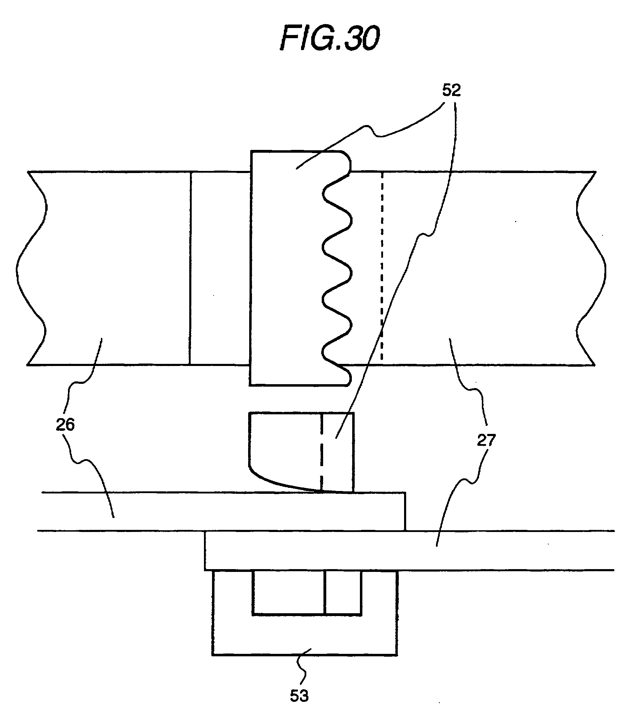

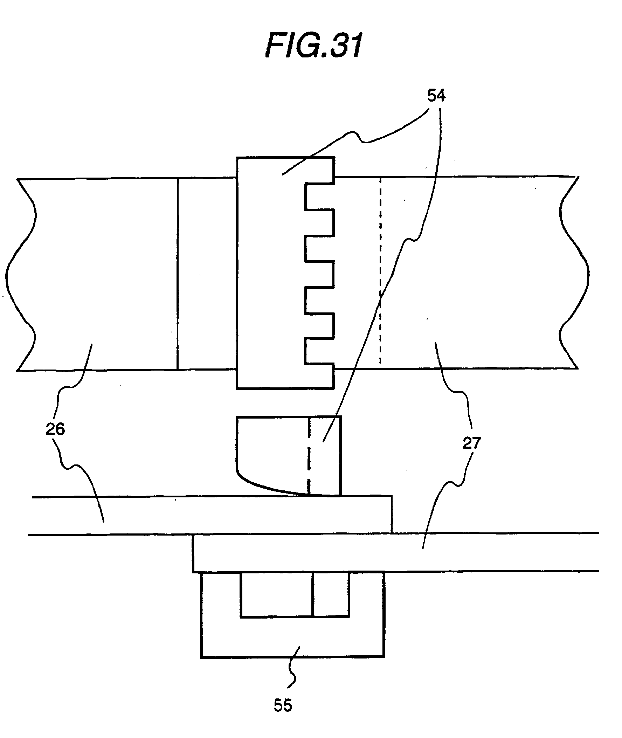

The shape of the upper shearing blade of the bonding apparatus of the embodiment 6 is made into a wave-form shape formed in curved shape or rectangular shape when viewed from upper side of the sheet bar, as shown in FIGS. 30, 31, whereby an upper shearing blade 52 or 54 is formed. The shape of the upper shearing blade viewed from a lateral side of the sheet bar is such that a portion corresponding to the wave form is a straight line in parallel with the bar and an arc-line, and the other portion is an arc-line. The shape of the lower shearing blade 53, 55, viewed from the upper side of the bar is wave-form which is the same as the shape of the upper shearing blade. Using the bonding apparatus, a bonding experiment of a soft steel simulate bar of 30t is conducted. The lap amount, pressing in stroke, pressing speed are the same conditions as in the embodiment 1. The bonding strength was higher than in the embodiment 1.

### Embodiment 20

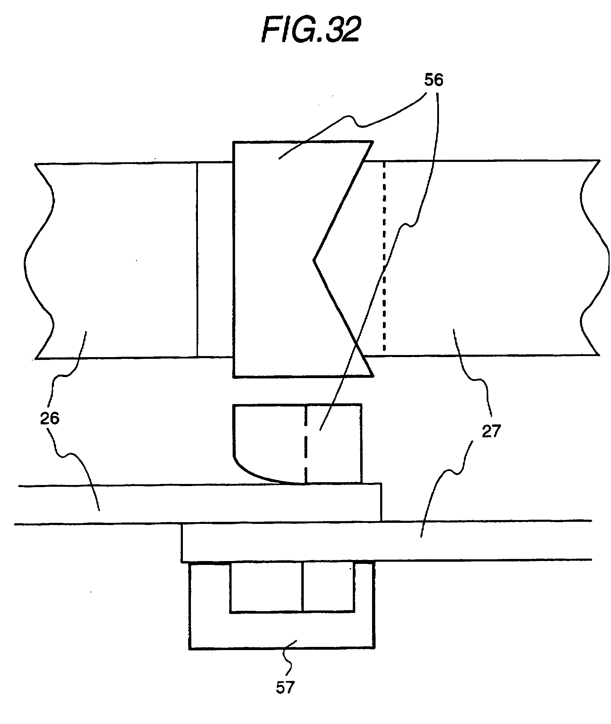

The shape of the upper shearing blade of the bonding apparatus of the embodiment 6 is made into a V-letter shape having both width ends projecting toward the forward side when viewed from upper side of the sheet bar, as shown in FIG. 32, whereby an upper shearing blade 56 is formed. The shape of the upper shearing blade 56 viewed from a lateral side of the sheet bar is such that a portion until a portion corresponding to a bottom portion of the V-letter shape is a straight line in parallel with the bar and an arc-line, and the other portion is an arc-line. The shape of the lower shearing blade 57 is a shape coping with the shape of the upper shearing blade. Using the bonding apparatus, the same sheet bars as in the embodiment 6 are bonded under the same bonding conditions as in the embodiment 6, and then finish rolling is effected. As a result, end cracks after the rolling become smaller than in the embodiment 6.

### Embodiment 21

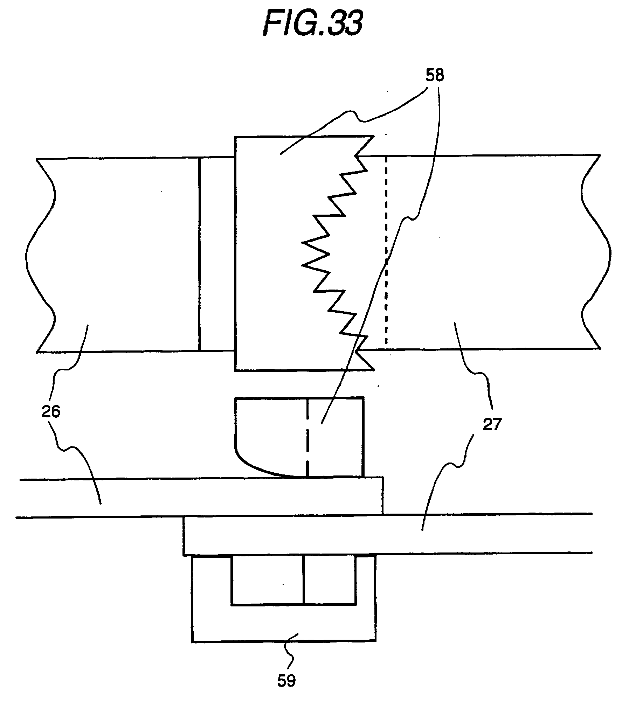

An upper shearing blade 58 is formed by forming the upper shearing blade of the bonding apparatus of the embodiment 6, viewed from the upper side of the sheet bar to be a multi-triangle-superimposed V-letter shape having both width ends projecting toward the forward side, as shown in FIG. 33. The shape of the upper shearing blade 58, viewed from a lateral side of the sheet bar is such that a portion until a portion corresponding to a bottom portion of the V-letter shape is a straight line in parallel with the bar and an arc-line, and the other portion is an arc-line. The shape of the lower shearing blade 59 is a shape coping with the shape of the upper shearing blade. Using the bonding apparatus, the same sheet bars as in the embodiment 6 are bonded under the same bonding conditions as in the embodiment 6, and then finish rolling is effected. As a result, bonding strength higher than in the embodiment 6 is attained and almost no end cracks after the rolling appears.

### Embodiment 22

A bonding apparatus of this embodiment is a type wherein both of the shearing blade 8(upper shearing blade) and the supports 9(lower shearing blade), shown in Fig. 3, of the embodiment 1 are simultaneously moved toward sheet bars to be bonded and the shearing blade 8 is pressed in a overlapped portion of the sheet bars. The shapes of the upper and lower shearing blades 8, 9, a pressing speed, pressing depth and a lap amount are the same as in the embodiment 1. Here, the bonding apparatus is a fixed type, that is, the bonding apparatus itself does not move along with the movement of the sheet bars, and it is a pendulum type wherein the upper and lower shearing blades 8, 9 move perpendicularly to the running sheet bars.

Namely, in the bonding apparatus, while the shearing blade 8 and the supports 9 are being moved in the running direction of the sheet bars by a speed synchronizing apparatus having a crank used therein( while they 8, 9 are being moved in synchromisim with the running speed of the sheet bars), at the same time the shearing blade 8 and the supports 9 are moved perpendicularly to the sheet bars to bond them. In the embodiment, also, the same bonding strength of the bars as in the embodiment 1 is attained.

According to the first aspect of the present invention, sufficiently strong bonding of metal plates is possible within short time. In particular, it is possible to provide a bonding apparatus which is disposed between a hot strip mill and a finish rolling mill and necessitated to provide because of difference in rolling speed between the rolling mills and which is suitable for bonding sheet bars.

According to the second aspect of the present invention, the entire length of the rolling facility can be shortened because the time required for bonding is short. A looper can be omitted. Since sufficient bonding strength can be attained, there is no such a problem that a bonded portion of bar is broken during rolling and the surfaces of the rolling rolls are scratched.

According to the third aspect of the present invention, it is possible to attain a strong bonding of metal plates.

## Claims

1. Method for bonding metal plates to each other at the end faces thereof, comprising
- overlapping at least two metal plates (1, 2) to provide an overlapped portion,
- restraining the overlapped portion of the metal plates in the longitudinal direction by supports (9),
- applying shearing forces to the overlapped portion of the metal plates by moving at least one shearing blade (8) or one support relatively against another in the thickness direction of the metal plates and
- pressing the sheared end faces of the metal plates against another,
**characterized by**
- supporting the overlapped portion of the metal plates (1, 2) in a position in which one of the supports (9) overlaps the shearing edge of the shearing blade (8) and
- plastically deforming the metal plates (1, 2) in a part of its overlapped portion by pressing a successively increasing part of the shearing blade in at least one (2) of the metal plates (1, 2), so that the plastically deformed end portion of one metal plate (2) will be pushed into the plastically deformed end portion of the other metal plate (1).

2. Method according to claim 1, **characterized in that** the shearing blade (8) and/or the support (9) will be pressed in the metal plates (1, 2) with a speed of at least 5 mm/s, preferably 50 mm/s or more.

3. Method according to claim 1 or 2, **characterized in that** oxide scales on the surface of at least one portion of the metal plates are removed before the metal plates are overlapped.

4. Method according to any one of claims 1 to 3, **characterized in that** the plastical deformation rate in the bonding parts of the plates (1, 2) is 1000 % or more.

5. Method according to anyone of claims 1 to 4, **characterized in that** the metal plates (1, 2) are hot rolling plates or continuously cast bars.

6. Bonding apparatus for bonding metal plates at the end sides thereof, comprising
- an overlapping mechanism (3) for overlapping portions to be bonded of the metal plates (1, 2),
- at least two supports (9) for supporting the overlapped portion of the metal plates at one side of the metal plates,
- a shearing blade (8) disposed at an opposition position of said support (9), and
- a moving mechanism for moving relatively at least one of said shearing blade (8) and said support (9) against another,
**characterized in that**
- the shearing blade (8) has such a shape that the shearing edge portion thereof is closer to the overlapped portion of the metal plates (1, 2) than the other edge portion and
- the extension line of the shearing blade (8) crosses the shearing support (9),
- so that by a relative movement of the shearing blade (8) and the shearing support (9) the overlapped plate portions to be bonded are sandwiched and plastically elongated by compression and the clean end faces of the plates (1, 2) are pressed to each other.

7. Bonding apparatus according to claim 6, **characterized by** a crop separation machine (10) for the separation of the upper and lower crops (12, 13) of the overlapped plate portions.

8. Bonding apparatus according to claim 6 or 7, **characterized by** a clamping mechanism (7) for clamping the overlapped portion of the plates (1, 2).

9. Bonding apparatus according to anyone of the claims 6 to 8, **characterized in that** the lapping (Lg) of the shearing blade (8) and the shearing support (9) is 10 mm or less in a longitudinal direction of the metal plates (1, 2).

10. Bonding apparatus according to anyone of claims 6 to 9, **characterized in that** a bonding stroke of at least one of said shearing blade (8) and said shearing support (9) from a contact position of said shearing blade on the surface of the overlapped metal plates is 50-150% of the thickness of a metal plate (2) of the overlapped metal plates (1, 2).

11. Bonding apparatus according to anyone of the claims 6 to 10, **characterized by** a mechanism in which said bonding apparatus (5) is movable on a rail.

12. Bonding apparatus according to anyone of the claims 6 to 11, **characterized in that** said shearing support (24) is adjustably (23) connected to a further support (22) on the same side to form a concave form (25).

13. Bonding apparatus according to anyone of the claims 6 to 12, **characterized in that** the metal plates (1, 2; 26, 27) are hot rolling plates.

14. Bonding apparatus according to anyone of the claims 6-13, **characterized in that** a sectional shape of said shearing blade (8), taken from a lateral side of a longitudinal direction of the metal plate, is a polygonal or trapezoidal shape, a contacting area of said shearing blade (8) and the metal paltes (1, 2) changes continuously and an angle of a portion of said shearing blade, contacting first with the metal plate is about 0° against the longitudinal direction of the metal plate.

15. Bonding apparatus according to anyone of the claims 6 to 14, **characterized in that** a sectional shape of said shearing blade, taken from a lateral side of a longitudinal direction of the metal plate, is different in a width direction of the metal plate.

16. Bonding apparatus according to anyone of the claims 6 to 15, **characterized in that** a sectional shape of said shearing blade (50), taken from an upper or lower side of the metal plate (26, 27) in a longitudinal direction, is formed in a wave-form defined by a straight or curved line.

17. Bonding apparatus according to anyone of the claims 6 to 16, **characterized in that** a sectional shape of said shearing blade (56), taken from an upper or lower side of the metal plate in a longitudinal direction, is a V-letter shape with both width-wise ends protruding toward a forward side of the metal plate (26, 27).

18. Bonding apparatus according to claim 12, **characterized in that** the length between said supports (22, 24) forming said concave form (25) in a longitudinal direction of the metal plate (26, 27) is shorter than the length of said shearing blade (21) in the longitudinal direction of the metal plate.

19. Bonding apparatus according to anyone of the claims 6 to 18, **characterized by** a temperature adjustor for adjusting the temperature of the metal plates to be bonded before bonding.

20. Bonding apparatus according to anyone of the claims 6 to 19, **characterized in that** the speed at which said at least one of said shearing blade (8) and said support (9) is pressed in the metal plates (1, 2) is 5 mm/s or more.

21. A hot strip mill facility, comprising:
an intermediate coiler (15) for coiling up a metal plate;
a leveler (16) for flattening the metal plate from said intermediate coiler;
a bonding apparatus according to one of the claims 6 to 20;
a crop treatment apparatus (17) for separating crop produced during the bonding; and
a finishing rolling mill (18, 19).

## Patentansprüche

1. Verfahren zum Verbinden von Metallplatten an ihren Stirnflächen, das umfasst
- Überlappen von mindestens zwei Metallplatten (1, 2) zur Erzeugung eines überlappten Abschnitts,
- Einspannen des überlappten Abschnitts der Metallplatten in Längsrichtung durch Halterungen (9),
- Aufbringen von Scherkräften auf den überlappten Abschnitt der Metallplatten durch das Bewegen eines Scherblatts (8) und/oder einer Halterung relativ gegeneinander in Dickenrichtung der Metallplatten und
- Gegeneinanderdrücken der gescherten Stirnflächen der Metallplatten,
**gekennzeichnet durch**
- Halten des überlappten Abschnitts der Metallplatten (1, 2) in einer Position, in der eine der Halterungen (9) die Scherkante des Scherblatts (8) überlappt und
- plastisches Verformen der Metallplatten (1, 2) in einem Teil ihres überlappten Abschnitts **durch** Drücken eines sukzessiv zunehmenden Teils des Scherblattes in mindestens eine der Metallplatten (1, 2), so dass der plastisch verformte Endabschnitt einer Metallplatte (2) in den plastisch verformten Endabschnitt der anderen Metallplatte (1) geschoben wird.

2. Verfahren nach Anspruch 1, **dadurch gekennzeichnet, dass** das Scherblatt (8) und/oder die Halterung (9) mit einer Geschwindigkeit von mindestens 5 mm/s und vorzugsweise 50 mm/s oder mehr in die Metallplatten (1, 2) gedrückt wird.

3. Verfahren nach Anspruch 1 oder 2, **dadurch gekennzeichnet, dass** Oxidschichten auf der Oberfläche von zumindest einem Abschnitt der Metallplatten entfernt werden, bevor die Metallplatten überlappt werden.

4. Verfahren nach einem der Ansprüche 1 bis 3, **dadurch gekennzeichnet, dass** die plastische Verformungsrate in den Verbindungsabschnitten der Platten (1, 2) 1000 % oder mehr beträgt.

5. Verfahren nach einem der Ansprüche 1 bis 4, **dadurch gekennzeichnet**, das die Metallplatten Warmwalzbleche oder kontinuierlich gegossene Barren sind.

6. Verbindungsvorrichtung zum Verbinden von Metallplatten an ihren Stirnseiten, die umfasst
- eine Überlappungsvorrichtung (3) zum Überlappen der zu verbindenden Abschnitte der Metallplatten (1, 2)
- mindestens zwei Halterungen (9) zum Halten des überlappten Abschnitts der Metallplatten an einer Seite der Metallplatten,
- ein Scherblatt (8), das in einer der Halterung (9) gegenüberliegenden Position angeordnet ist, und
- eine Bewegungsvorrichtung zur relativen Bewegung des Scherblatts (8) und/oder der Halterung (9) gegeneinander
**dadurch gekennzeichnet, dass**
- das Scherblatt (8) eine derartige Form aufweist, dass sich sein Scherkantenabschnitt näher an dem überlappten Abschnitt der Metallplatten (1, 2) befindet, als der andere Kantenabschnitt und
- die Verlängerungslinie des Scherblatts (8) die Scherhalterung (9) kreuzt,
- so dass die überlappten, zu verbindenden Plattenabschnitte durch eine relative Bewegung des Scherblatts (8) und der Scherhalterung (9) eingeklemmt und durch Druck plastisch verlängert werden, und die sauberen Stirnflächen der Platten (1, 2) zusammengedrückt werden.

7. Verbindungsvorrichtung nach Anspruch 6, **gekennzeichnet durch** eine Verschnittenden-Abtrennmaschine (10) für die Abtrennung der oberen und unteren Verschnittenden (12, 13) der überlappten Plattenabschnitte.

8. Verbindungsvorrichtung nach Anspruch 6 oder 7, **gekennzeichnet durch** eine Klemmvorichtung (7) zum Festklemmen des überlappten Abschnitts der Platten (1, 2).

9. Verbindungsvorrichtung nach einem der Ansprüche 6 bis 8, **dadurch gekennzeichnet, dass** die Überlappung (Lg) des Scherblatts (8) und der Scherhalterung (9) in einer Längsrichtung der Metallplatten (1, 2) 10 mm oder weniger beträgt.

10. Verbindungsvorrichtung nach einem der Ansprüche 6 bis 9, **dadurch gekennzeichnet, dass** ein Verbindungshub des Scherblatts (8) und/oder der Scherhalterung (9) von einer Kontaktposition des Scherblatts auf der Oberfläche der überlappten Metallplatten 50 - 150 % der Dicke einer Metallplatte (2) der überlappten Metallplatten (1, 2) beträgt.

11. Verbindungsvorrichtung nach einem der Ansprüche 6 bis 10, **gekennzeichnet durch** eine Vorrichtung, in der die Verbindungsvorrichtung (5) auf einer Schiene bewegbar ist.

12. Verbindungsvorrichtung nach einem der Ansprüche 6 bis 11, **dadurch gekennzeichnet, dass** die Scherhalterung (24) zur Bildung einer konkaven Form (25) verstellbar (23) mit einer weiteren Halterung (22) auf derselben Seite verbunden ist.

13. Verbindungsvorrichtung nach einem der Ansprüche 6 bis 12, **dadurch gekennzeichnet, dass** die Metallplatten (1, 2; 26, 27) Warmwalzbleche sind.

14. Verbindungsvorrichtung nach einem der Ansprüche 6 bis 13, **dadurch gekennzeichnet, dass** eine Querschnittsform des Scherblatts (8), quer zu einer Längsrichtung der Metallplatten betrachtet, eine polygonale oder trapezförmige Form ist, sich ein Kontaktbereich des Scherblatts (8) und der Metallplatten (1, 2) kontinuierlich ändert und ein Winkel eines Abschnitts des Scherblatts, der zuerst mit der Metallplatte in Kontakt kommt, ungefähr 0 ° zur Längsrichtung der Metallplatte ist.

15. Verbindungsvorrichtung nach einem der Ansprüche 6 bis 14, **dadurch gekennzeichnet, dass** eine Querschnittsform des Scherblatts, quer zur Längsrichtung der Metallplatte betrachtet, in Richtung der Breite der Metallplatte unterschiedlich ist.

16. Verbindungsvorrichtung nach einem der Ansprüche 6 bis 15, **dadurch gekennzeichnet, dass** eine Querschnittsform des Scherblatts (50), von einer oberen oder einer unteren Seite der Metallplatte (26, 27) betrachtet, in Längsrichtung zu einer Wellenform geformt ist, die durch eine gerade oder gekrümmte Linie definiert ist.

17. Verbindungsvorrichtung nach einem der Ansprüche 6 bis 16, **dadurch gekennzeichnet, dass** eine Querschnittsform des Scherblatts (56) von einer oberen oder einer unteren Seite der Metallplatte betrachtet, in Längsrichtung die Form des Buchstaben V hat, wobei beide, in Breitenrichtung weisende Enden in Richtung einer Vorderseite der Metallplatte (26, 27) ragen.

18. Verbindungsvorrichtung nach Anspruch 12, **dadurch gekennzeichnet, dass** die Länge zwischen den Halterungen (22, 24), die die konkave Form (25) bilden, in einer Längsrichtung der Metallplatte (26, 27) kürzer ist, als die Länge des Scherblatts (21) in der Längsrichtung der Metallplatte.

19. Verbindungsvorrichtung nach einem der Ansprüche 6 bis 18, **gekennzeichnet durch** einen Temperatur-Regulierer zur Regulierung der Temperatur der zu verbindenden Metallplatten vor dem Verbinden.

20. Verbindungsvorrichtung nach einem der Ansprüche 6 bis 19, **dadurch gekennzeichnet, dass** die Geschwindigkeit, mit das Scherblatt (8) und/oder die Halterung (9) in die Metallplatten (1, 2) gedrückt wird, 5 mm/s oder mehr beträgt.

21. Warmbandwalzwerkanlage, die umfasst:
- eine Zwischenwickelmaschine (15) zum Aufwickeln einer Metallplatte;
- einen Planierer (16) zum Abflachen der Metallplatte von der Zwischenwickelmaschine;
- eine Verbindungsvorrichtung nach einem der Ansprüche 6 bis 20;
- eine Verschnittenden-Behandlungsvorrichtung (17) zum Abtrennen der während des Verbindens erzeugten Verschnittenden; und
- einem Fertigwalzwerk (18, 19).

## Revendications

1. Procédé de soudage de tôles à leurs extrémités respectives, comprenant :
- le recouvrement d'au moins deux tôles (1,2) pour fournir une partie recouverte,
- le blocage de la partie recouverte des tôles en longueur par des supports (9)
- l'application de forces de cisaillement à la partie recouverte des tôles en déplaçant au moins une lame de 1 cisaille (8) ou un support l'un par rapport à l'autre dans la direction de l'épaisseur des tôles et
- la pression des faces cisaillées des tôles l'une contre l'autre,
**caractérisé en ce que**
- l'appui de la partie recouverte des tôles (1, 2) dans une position où l'un des supports (9) recouvre le bord coupant de la lame de la cisaille (8) et
- la déformation plastique des tôles (1,2) à un endroit de la partie recouverte en accentuant la pression de la lame de la cisaille sur au moins une (2) des tôles (1, 2) pour que la partie plastiquement déformée d'une des tôles (2) soit poussée contre la partie plastiquement déformée de l'autre (1).

2. Procédé selon la revendication 1, **caractérisé en ce que** la lame de la cisaille (8) et/ou le support (9) vont être pressés sur les tôles (1, 2) à une vitesse d'au moins 5 mm/s, de préférence 50 mm/s ou davantage.

3. Procédé conformément à l'une des revendications 1 ou 2, **caractérisé en ce que** les traces d'oxydation de la surface d'au moins une partie des tôles sont enlevées avant que les tôles soient recouvertes.

4. Procédé conformément à l'une quelconque des revendications 1 à 3 **caractérisé en ce que** le taux de déformation plastique des parties soudées des tôles (1, 2) est de 1000% ou plus.

5. Procédé selon l'une quelconque des revendications 1 à 4, **caractérisé en ce que** les tôles (1, 2) sont des bandes laminées à chaud ou des barres fondues en continu.

6. Dispositif de soudage pour souder des tôles à leur extrémité, comprenant :
- un mécanisme de recouvrement (3) pour les parties recouvertes à souder des tôles (1, 2),
- au moins deux supports (9) pour soutenir la partie recouverte des tôles sur un côté,
- une lame de cisaille (8) placée à l'opposé dudit support (9) et
- un mécanisme mobile pour déplacer jusqu'à un certain point au moins ladite lame de cisaille (8) et ledit support (9) l'un contre l'autre,
**caractérisé en ce que** :
- la lame de cisaille (8) a une forme telle que le bord coupant est plus proche de la partie recouverte des tôles (1, 2) que l'autre bord et
- la ligne d'extension de la lame de cisaille (8) croise le support de cisaillement (9),
- si bien que par un mouvement relatif de la lame de cisaillement (8) et du support de cisaillement (9) les parties recouvertes des tôles à souder sont prises en sandwich et plastiquement étirées par compression et les extrémités nettes des tôles (1, 2) sont pressées l'une contre l'autre.

7. Dispositif de soudure conformément à la revendication 6, **caractérisé par** une machine de décollement des chutes (10) pour la séparation des chutes supérieures et inférieures (12, 13) des parties recouvertes des tôles.

8. Dispositif de soudure conformément aux revendications 6 ou 7, **caractérisé par** un mécanisme de pince (7) pour serrer la partie recouverte de tôles (1, 2).

9. Dispositif de soudure conformément à l'une quelconque des revendications 6 à 8, **caractérisé en ce que** le recouvrement (Lg) de la lame de cisaille (8) et du support de cisaillement est de 10 mm au plus dans le sens de la longueur des tôles (1, 2).

10. Dispositif de soudure conformément à l'une quelconque des revendications 6 à 9, **caractérisé en ce qu'**une coulée de soudure d'au moins une des lames de cisaille (8) ou desdits supports de cisaillement d'une position de contact de ladite lame de cisaille sur la surface des tôles recouvertes est de 50 à 150% de l'épaisseur de la tôle (2) des tôles recouvertes (1, 2).

11. Dispositif de soudure conformément à l'une quelconque des revendications 6 à 10, **caractérisé par** un mécanisme dans lequel ledit dispositif de soudure (5) peut se déplacer sur un rail.

12. Dispositif de soudure conformément à l'une quelconque des revendications 6 à 11, **caractérisé en ce que** ledit support de cisaillement (24) est ajusté sur un autre support (22) du même côté pour définir une forme concave (25).

13. Dispositif de soudure conformément à l'une quelconque des revendications 6 à 12, **caractérisé en ce que** les tôles (1, 2 ; 26, 27) sont des bandes de laminage à chaud.

14. Dispositif de soudure conformément à l'une quelconque des revendications 6-13, **caractérisé en ce que** la forme en coupe transversale de ladite lame de cisaille (8) prise de côté dans le sens de la longueur de la tôle, est en forme de polygone ou de trapèze, une zone de contact de ladite lame de cisaille (8) et des tôles (1, 2) change en permanence et un angle d'une partie de ladite lame de cisaille, qui est d'abord en contact avec la tôle est d'environ 0° par rapport au sens de la longueur de la tôle.

15. Dispositif de soudure conformément à l'une quelconque des revendications 6 à 14, **caractérisé en ce que** la forme en coupe transversale de ladite lame de cisaille, prise de côté dans le sens de la longueur de la tôle est différente dans le sens de la largeur de la tôle.

16. Dispositif de soudure conformément à l'une quelconque des revendications 6 à 15, **caractérisé en ce que** la forme en coupe transversale de ladite lame de la cisaille (50), prise d'une face supérieure ou inférieure de la tôle (26, 27) dans le sens de la longueur est une onde définie par une ligne droite ou courbe.

17. Dispositif de soudure conformément à l'une quelconque des revendications 6 à 16, **caractérisé en ce que** la forme en coupe transversale de ladite lame de cisaillement (56), prise d'une face supérieure ou inférieure de la tôle dans le sens de la longueur, est une forme en V avec les deux extrémités de la largeur en saillie vers l'avant de la tôle (26, 27).

18. Dispositif de soudure conformément à la revendication 12, **caractérisé en ce que** la longueur entre lesdits supports (22, 24) composant ladite forme concave (25) dans le sens de la longueur de la tôle (26, 27) est inférieure à la longueur de ladite lame de cisaillement (21) dans le sens de la longueur de la tôle.

19. Dispositif de soudure conformément à l'une quelconque des revendications 6 à 18, **caractérisé par** un thermostat permettant de régler la température des tôles à souder avant le soudage.

20. Dispositif de soudure conformément à l'une quelconque des revendications 6 à 19, **caractérisé en ce que** la vitesse à laquelle l'un au moins de ladite lame de cisaille (8) ou dudit support (9) est pressé sur les tôles (1, 2) est de 5 mm / s ou davantage.

21. Train continu à bandes, comprenant :
- Une bobineuse intermédiaire (15) pour enrouler une tôle ;
- Une répaleuse (16) pour aplatir la tôle provenant de ladite bobineuse intermédiaire ;
- Un dispositif de soudage conformément à l'une quelconque des revendications 6 à 20 ;
- Un dispositif de traitement des chutes (17) pour séparer les chutes produites pendant le soudage ; et
- Un laminoir de finition (18, 19).
